# EUROPEAN PATENT SPECIFICATION

(11) **EP 2 183 135 B1**
(45) Date of publication and mention of the grant of the patent: **15.06.2011**
(21) Application number: 08806977.8
(22) Date of filing: 03.09.2008
(51) Int. Cl.: B60T 8/36, F16K 31/06, H01F 7/08

(54) **NORMALLY CLOSED ELECTROMAGNETIC VALVE AND A BRAKE CONTROL SYSTEM COMPRISING SUCH A VALVE**
NORMAL GESCHLOSSENES ELEKTROMAGNETISCHES VENTIL UND BREMSSTEUERSYSTEM MIT EINEM DERARTIGEN VENTIL
ÉLECTROVALVE NORMALEMENT FERMÉE ET SYSTÈME DE COMMANDE DE FREINAGE COMPRENANT UNE TELLE VALVE

(30) Priority: 04.09.2007 JP 2007229479; 12.05.2008 JP 2008125301
(43) Date of publication of application: 12.05.2010
(73) Proprietor: Toyota Jidosha Kabushiki Kaisha, Toyota-shi, Aichi-ken, 471-8571 (JP)
(72) Inventor: NANAHARA, Masaki c/o Toyota Jidosha Kabushiki Kaisha, Toyota-shi, Aichi-ken, 471-8571 (JP)
(74) Representative: Winter, Brandl, Fürniss, Hübner, Röss, Kaiser, Polte - Partnerschaft
(86) International application number: PCT/IB2008/002281
(87) International publication number: WO 2009/031007

(56) References cited:
- EP-A- 0 670 445
- WO-A-97/10135
- DE-A1- 19 646 835
- JP-A- 2000 266 216
- US-A- 3 463 443

## Description

### BACKGROUND OF THE INVENTION

### 1. Field of the Invention

The invention relates to an electromagnetic valve, and more particularly, to a normally closed electromagnetic valve, a control method thereof, and a brake control system provided with a normally closed electromagnetic valve. The invention also relates to an electromagnetic valve in which is formed a fluid chamber in which hydraulic fluid is stored.

### 2. Description of the Related Art

In recent years there has been much progress in the development of electronically controlled brake systems that aim to improve running stability and vehicle safety by electronically controlling the braking force applied to each of a plurality of wheels of a vehicle. Linear solenoid valves are widely used to increase and decrease the wheel cylinder pressure in these electronically controlled brake systems. As one such linear solenoid valve, Japanese Patent Application Publication No. 2005-30562 (JP-A-2005-30562) and Japanese Patent Application Publication No. 2006-17181 (JP-A-2006-17181) propose a normally closed electronic valve that closes off a hydraulic fluid path by using a spring to push a rod against a seat so that the rod is seated on the seat.

In this normally closed electronic valve, the direction of the urging force of the spring against the rod is opposite the direction of the reaction force from the hydraulic pressure. Therefore, when the rod moves away from the seat when the valve is suddenly opened, for example, the hydraulic pressure decreases from the outflow of hydraulic fluid such that the rod is again pushed toward the seat by the urging force of the spring. As a result, the hydraulic fluid path is again restricted so the pressure builds again until the rod is again pushed away from the seat. When this event repeats, it results in a phenomenon known as self-excited vibration, in which the hydraulic pressure pulses causing the line carrying the hydraulic fluid to vibrate. Self-excited vibration can be one cause of noise.
A normally closed electromagnetic valve according to the preamble of claim 1 is known from US 3,463,443 B.
DE 196 46 835 A1 suggests to provide an armature comprising an inner armature member being connected to member for closing off and opening a hydraulic fluid path and being axially movable relative to the valve body, and an outer armature member which has the form of a tube and which is axially movable relative to both the inner armature member and the valve body. A spring urges the inner armature member towards the valve seat.

### SUMMARY OF THE INVENTION

This invention thus provides a normally closed electromagnetic valve that suppresses self-excited vibration. The invention also provides an electromagnetic valve that suppresses an adverse effect caused by a member inside the electromagnetic valve moving at high velocity.

A first aspect of the invention relates to a normally closed electromagnetic valve that includes i) a seat having a valve seat interposed in a hydraulic fluid path; ii) a rod which is supported so as to be able to move in a first direction toward the valve seat as well as in a second direction away from the valve seat, and which closes off the hydraulic fluid path when seated on the valve seat, and opens up the hydraulic fluid path when away from the valve seat; iii) a first armature which is a magnetic body that is supported so as to be able to move in the first direction and in the second direction; iv) urging means for urging the first armature in the first direction; v) a second armature which is a magnetic body that is supported so as to be able to move in the first direction and in the second direction; and vi) a coil that is wound around the periphery of the first armature and the second armature. In this normally closed electromagnetic valve, when current is not being supplied to the coil, the first armature pushes the rod in the first direction to seat the rod on the valve seat using urging force from the urging means. When current is being supplied to the coil, the first armature moves in the second direction, and the second armature pushes the rod in the first direction with force corresponding to the amount of current supplied to the coil.

According to this structure, the electromagnetic valve can be opened and closed by applying electromagnetic force to the second armature to which urging force is not being applied in the first direction by the urging means. Therefore, pulsation of the hydraulic fluid caused by the urging force of the urging means and the reaction force from the hydraulic pressure can be suppressed, thus suppressing self-excited vibration.

In the normally closed electromagnetic valve according to this aspect, when current is being supplied to the coil, the first armature may move in the second direction by electromagnetic force applied as a result of the current being supplied to the coil, and the second armature may push the rod in the first direction using electromagnetic force corresponding to the amount of current supplied to the coil such that the rod is either seated on the valve seat or in a position away from the valve seat.

In the normally closed electromagnetic valve according to this aspect, the first armature may have an overlapping portion and the second armature may have an overlapping portion, the overlapping portion of the first armature and the overlapping portion of the second armature adjacently overlapping each other when viewed from the radial direction.

According to the foregoing structure, the lines of magnetic flux extend in a direction orthogonal to the overlapping surfaces of the magnetic members such that force which pulls those magnetic members together is generated in this direction. With this structure, the lines of magnetic flux can be directed in the radial direction of the rod via these overlapping portions, so the generation of force in the direction in which the first armature and the second armature pull together can be suppressed. As a result, the first armature and the second armature can move smoothly in the first direction or the second direction.

The normally closed electromagnetic valve according to this aspect may also include a magnetic flux transmitting member which is a magnetic body that adjacently overlaps with the first armature and the second armature when viewed from the radial direction.

According to this structure, a magnetic flux path may be provided between the first armature and the guide member, and between the guide member and the second armature. Therefore, force that pulls the first armature and the second armature together can be suppressed so the first armature and the second armature can move smoothly in the first direction or the second direction.

The normally closed electromagnetic valve according to this aspect may also include a sleeve which is a magnetic body that is arranged on the second direction side of the first armature.

According to this structure, the first armature can be pulled in the second direction by a strong force as it is moved in the second direction using the force that pulls the first armature and the sleeve together. Accordingly, when urging force is being applied to the rod such that the rod is seated on the valve seat, this urging force can be quickly cancelled by smoothly moving the first armature in the second direction.

In the normally closed electromagnetic valve according to this aspect, the first armature may be arranged on the second direction side of the rod, and one end of the urging means may be retained by the sleeve and the other end of the urging means may abut against the first armature so as to urge the first armature in the first direction. Further, the second armature may be arranged on the first direction side of the first armature, have an insertion hole into which the rod is inserted, and be fixed to the rod.

This structure makes it possible to easily realize a structure that closes the valve using the urging force of the urging means when current is not being supplied, and opens or closes the valve while suppressing the effect from the urging force of the urging means when current is being supplied.

The normally closed electromagnetic valve according to this aspect may also include a guide which i) is a magnetic body, ii) is arranged on the first direction side of the second armature, iii) has a first portion that overlaps with the second armature when viewed from the radial direction, and a second portion that overlaps with the second armature when viewed from the first direction, and iv) guides the movement of the rod in the first direction and the second direction.

In the normally closed electromagnetic valve according to this aspect, the rod may be a nonmagnetic body.

In the normally closed electromagnetic valve according to this aspect, the radial direction may be a direction that is orthogonal to the first direction and orthogonal to the second direction.

The normally closed electromagnetic valve described above may also include an accommodating member in which is formed a fluid chamber in which hydraulic fluid is stored, and flow resistance changing means. Also, the first armature may be arranged in the fluid chamber so as to divide the fluid chamber into two sub-chambers. Further, a flow path that communicates the two sub-chambers with one another may be provided in the first armature, and the flow resistance changing means may increase the flow resistance of hydraulic fluid through the flow path when the first armature moves inside the fluid chamber. The accommodating member may be formed from the sleeve and the guide.

In the normally closed electromagnetic valve described above, the flow resistance changing means may have an abutting member that increases the flow resistance of hydraulic fluid through the flow path by abutting against the first armature to block a portion of the flow path when the first armature moves inside the fluid chamber.

In this normally closed electromagnetic valve, the abutting member may abut against the first armature to block a portion of the flow path when the first armature moves in at least one direction from among the first direction and the second direction.

A second aspect of the invention relates to a brake control system that is provided with a normally closed electromagnetic valve and wheel cylinder pressure controlling means. The normally closed electromagnetic valve includes a seat, a rod, a first armature, urging means, a second armature, and a coil. The seat has a valve seat interposed between a wheel cylinder and a hydraulic fluid discharge path. The rod is supported so as to be able to move in a first direction toward the valve seat as well as in a second direction away from the valve seat, and closes off communication between the wheel cylinder and the hydraulic fluid discharge path to suppress a decrease in wheel cylinder pressure when seated on the valve seat, and opens up communication between the wheel cylinder and the hydraulic fluid discharge path to decrease the wheel cylinder pressure when away from the valve seat. The first armature is a magnetic body that is supported so as to be able to move in the first direction and in the second direction. The urging means urges the first armature in the first direction. The second armature is a magnetic body that is supported so as to be able to move in the first direction and in the second direction. The coil is wound around the periphery of the first armature and the second armature. When current is not being supplied to the coil, the first armature pushes the rod in the first direction using urging force from the urging means to seat the rod on the valve seat, and when current is being supplied to the coil, the first armature moves in the second direction by electromagnetic force applied as a result of the current being supplied to the coil, and the second armature pushes the rod in the first direction with force corresponding to the amount of current supplied to the coil such that the rod is either seated on the valve seat or in a position away from the valve seat. The wheel cylinder pressure controlling means controls the supply of current to the coil. In this particular system, the wheel cylinder pressure controlling means stops the supply of current to the coil when it is predicted that the decrease in the wheel cylinder pressure will continue to be suppressed.

This kind of normally closed electromagnetic valve can be closed by controlling the operation of the second armature while current is being supplied to the coil to suppress the effect of the urging force from the urging means, as well as by stopping the supply of current to the coil. To enable the valve to open smoothly, it is preferable to close the electromagnetic valve using the former method. However, this requires that current be constantly supplied to the coil. With the foregoing structure, the electromagnetic valve can be closed using the latter method when it is predicted that a decrease in wheel cylinder pressure will continue to be inhibited, in which case it is unlikely that there will be a need to smoothly open the valve. This makes it possible to suppress an increase in the amount of power consumed by providing this kind of electromagnetic valve.

In this brake control system, the wheel cylinder pressure controlling means may predict that the decrease in the wheel cylinder pressure will continue to be suppressed and stop the supply of current to the coil when the wheel cylinder pressure has continued to be constant for a predetermined period of time or longer.

When the wheel cylinder pressure continues to be kept constant, it is highly likely that a decrease in wheel cylinder pressure will continue to be inhibited without the driver repeatedly performing a sudden brake operation. Therefore, this structure enables an increase in power consumption to be easily suppressed by stopping the supply of current to the coil.

The following aspects relate to the background of the present invention:

A third aspect relates to a control method for a normally closed electromagnetic valve that includes a seat having a valve seat interposed in a hydraulic fluid path; a rod which is supported so as to be able to move in a first direction toward the valve seat as well as in a second direction away from the valve seat, and which closes off the hydraulic fluid path when seated on the valve seat, and opens up the hydraulic fluid path when away from the valve seat; urging means for urging the rod in the first direction; a movable member which is a magnetic body, is fixed to the rod, and is able to move integrally with the rod in the first direction and in the second direction; and a coil that is wound around the periphery of the movable member. This control method includes a) inhibiting the rod from being urged by the urging means in the first direction when current is supplied to the coil; and b) moving the movable member in at least one of the first direction and the second direction independent of step a) when current is supplied to the coil.

In this control method, when the amount of current supplied to the coil is changed, the movement of the movable member may change between movement in the first direction and movement in the second direction.

A fourth aspect relates to an electromagnetic valve that includes an accommodating member in which is formed a fluid chamber in which hydraulic fluid is stored; a first armature which is arranged in the fluid chamber so as to divide the fluid chamber into two sub-chambers, and in which a flow path is provided that communicates the two sub-chambers with one another; and flow resistance changing means for increasing the flow resistance of hydraulic fluid through the flow path when the first armature moves inside the fluid chamber.

In an electromagnetic valve, for example, when the valve is open and then current stops being supplied to the coil, the spring may cause the rod to strike the valve seat at high velocity such that an abnormal noise or the like may result. According to the structure described above, the first armature can be inhibited from moving at high velocity by increasing the flow resistance of the hydraulic fluid. This makes it possible to suppress an abnormal noise or the like from being produced as a result of the first armature abutting against a receiving portion while traveling at high velocity.

In this electromagnetic valve, the flow resistance changing means may have an abutting member that increases the flow resistance of hydraulic fluid through the flow path by abutting against the first armature to block a portion of the flow path when the first armature moves inside the fluid chamber. This structure makes it possible to keep the velocity at which the first armature abuts against the receiving portion down by simply blocking a portion of the flow path.

The electromagnetic valve described above may also include a valve seat interposed in a hydraulic fluid path, and a rod which is provided so as to be able to move in a first direction toward the valve seat as well as in a second direction away from the valve seat, and which closes off the hydraulic fluid path when seated on the valve seat, and opens up the hydraulic fluid path when away from the valve seat. Also, the first armature may be provided so as to move in the second direction when the rod moves away from the valve seat, and the abutting member may abut against the first armature to block a portion of the flow path when the first armature moves in the second direction.

When the rod moves away from the valve seat in this way, the first armature may move in the second direction and abut against the receiving portion. This structure makes it possible to keep the velocity at which the first armature abuts against the receiving portion in this case down.

The electromagnetic valve described above may also include urging means for applying urging force in the first direction to the rod such that the rod comes to be seated on the valve seat; and a coil that is wound around the periphery of the first armature. Moreover, the first armature may be provided so as to move in the second direction against the urging force of the urging means in response to electromagnetic force applied as a result of current being supplied to the coil.

When this kind of first armature moves in response to electromagnetic force, attraction force is generated between the first armature and the receiving portion when the first armature comes close to the receiving portion. As a result, the first armature may abut against the receiving portion at high velocity, which increases the likelihood of an abnormal noise or the like being produced. The structure described above enables the velocity at which the first armature abuts against the receiving portion in this case to be reduced.

In the electromagnetic valve described above, the urging means may apply urging force in the first direction to the first armature. When current is not being supplied to the coil, the first armature may move together with the rod in the first direction to seat the rod on the valve seat in response to the urging force of the urging means. When current is being supplied to the coil, the first armature may move in the second direction away from the rod against the urging force of the urging means in response to the applied electromagnetic force. According to this structure, opening and closing of the electromagnetic valve can be controlled, irrespective of the urging force of the urging means, by the first armature moving away from the rod. As a result, self-excited vibration produced inside the electromagnetic valve can be suppressed.

The electromagnetic valve described above may also include a valve seat interposed in a hydraulic fluid path; and a rod which is provided so as to be able to move in a first direction toward the valve seat as well as in a second direction away from the valve seat, and which closes off the hydraulic fluid path when seated on the valve seat, and opens up the hydraulic fluid path when away from the valve seat. Moreover, the first armature may be provided so as to move together with the rod in the first direction to seat the rod on the valve seat, and the abutting member may abut against the first armature to block a portion of the flow path when the first armature moves in the first direction inside the fluid chamber. This structure makes it possible to reduce the velocity at which the rod strikes the valve seat when it is seated. As a result, it is possible to inhibit an abnormal noise or the like from being produced as a result of the rod striking the valve seat at high velocity.

This electromagnetic valve may also include urging means for applying urging force in the first direction to the rod such that the rod comes to be seated on the valve seat. Also, the first armature may be provided so as to move together with the rod in the first direction to seat the rod on the valve seat in response to the urging force of the urging means.

When seating the rod on the valve seat using the urging force of the urging means, it is generally difficult to control the velocity at which the rod is seated on the valve seat. The foregoing structure makes it possible to reduce the velocity at which the rod is seated on the valve seat in this case.

This electromagnetic valve may also include a coil that is wound around the periphery of the first armature. Also, the urging means may apply urging force in the first direction to the first armature. When current is not being supplied to the coil, the first armature may move together with the rod in the first direction to seat the rod on the valve seat in response to the urging force of the urging means. When current is being supplied to the coil, the first armature may move in the second direction away from the rod against the urging force of the urging means in response to the applied electromagnetic force. According to this structure, opening and closing of the electromagnetic valve can be controlled, irrespective of the urging force of the urging means, by the first armature moving away from the rod. As a result, self-excited vibration produced inside the electromagnetic valve can be suppressed.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG 1 is a system diagram of a brake control system according to a first example embodiment of the invention;
FIG 2 is a sectional view showing in detail the structure of a normally closed electromagnetic valve in the brake control system according to the first example embodiment of the invention;
FIG 3 is a view showing the path of magnetic flux of the normally closed electromagnetic valve according to the first example embodiment of the invention;
FIG 4 is a chart showing one example of change over time in current supplied to a coil from STEP 1 to STEP 4 of the normally closed electromagnetic valve according to the first example embodiment of the invention, the position of a first armature at each point, the position of a second armature at each point, and the open/closed state of the normally closed electromagnetic valve at each point;
FIG 5A is a view showing the state of the normally closed electromagnetic valve at STEP 1 in FIG 4; FIG 5B is a view showing the state of the normally closed electromagnetic valve at STEP 2 in FIG 4; FIG 5C is a view showing the state of the normally closed electromagnetic valve at STEP 3 in FIG 4; and FIG 5D is a view showing the state of the normally closed electromagnetic valve at STEP 4 in FIG 4;
FIG 6 is a graph showing the relationship between a first gap g1 and the attraction force between the first armature and a sleeve of the normally closed electromagnetic valve according to the first example embodiment of the invention;
FIG 7 is a graph showing the relationship between a second gap g2 and the attraction force between the second armature and a guide of the normally closed electromagnetic valve according to the first example embodiment of the invention;
FIG 8 is a graph showing the relationship between the attraction force acting to move the first armature in a second direction, and the attraction force acting to move the second armature in a first direction;
FIG 9A is a graph showing an example of wheel cylinder pressure changing over time; and FIG 9B is a graph showing the current supplied to the coil when changing the wheel cylinder pressure as shown in FIG 9A in the normally closed electromagnetic valve according to the first example embodiment;
FIG 10 is a sectional view showing in detail the structure of a normally closed electromagnetic valve in a brake control system according to a second example embodiment of the invention;
FIG 11 is a view showing the path of magnetic flux of the normally closed electromagnetic valve according to the second example embodiment of the invention;
FIG 12 is a sectional view showing in detail the structure of a normally closed electromagnetic valve in a brake control system according to a third example embodiment of the invention;
FIG 13 is a view showing the path of magnetic flux of the normally closed electromagnetic valve according to the third example embodiment of the invention;
FIG 14A is a graph showing an example of wheel cylinder pressure applied to a wheel cylinder, and FIG 14B is a graph showing the current supplied to the coil when obtaining wheel cylinder pressure such as that shown in FIG 14A in a normally closed electromagnetic valve according to a fourth example embodiment of the invention;
FIG 15 is a sectional view showing in detail the structure of a normally closed electromagnetic valve according to a fifth example embodiment of the invention;
FIG 16 is a sectional view of a first armature according to the fifth example embodiment of the invention;
FIG 17A is a view showing the state of the normally closed electromagnetic valve according to the fifth example embodiment at STEP 1; FIG 17B is a view showing the state of the normally closed electromagnetic valve after a short period of time has passed after a first armature ON current Ion is supplied to the coil from STEP 1; and FIG 17C is a view showing the state of the normally closed electromagnetic valve when it has reached the state of STEP 2; and
FIG 18A is a view showing the state of the normally closed electromagnetic valve according to the fifth example embodiment at STEP 2; FIG 18B is a view showing the state of the normally closed electromagnetic valve when the rod and the first armature are abutting against one another; and FIG 18C is a view showing the state of the normally closed electromagnetic valve at STEP 4.

### DETAILED DESCRIPTION OF THE EMBODIMENTS

Hereinafter, example embodiments of the invention will be described in detail with reference to the accompanying drawings.

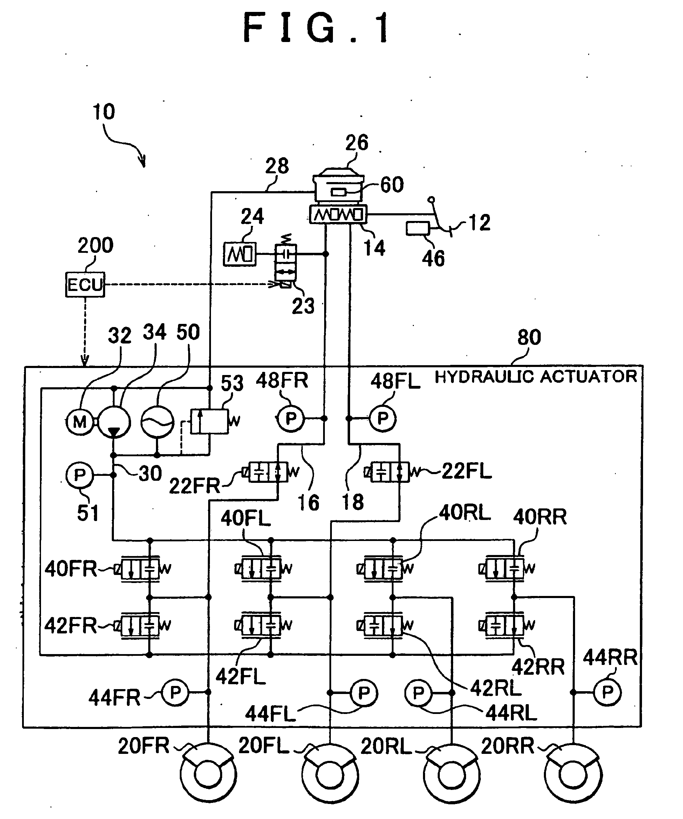

FIG 1 is a system diagram of a brake control system 10 according to a first example embodiment. The brake control system 10 is an electronically controlled brake (ECB) system that independently and optimally sets the braking force applied to each of four wheels of a vehicle in response to an operation of a brake pedal 12, which serves as a brake operating member, by a driver.

The brake pedal 12 is connected to a master cylinder 14 that discharges brake fluid, i.e., hydraulic fluid, according to a depression operation performed by the driver. Also, a stroke sensor 46 that detects the depression stroke is provided with the brake pedal 12. Furthermore, a reservoir 26 is connected to the master cylinder 14. One outlet port of the master cylinder 14 is connected via an electromagnetic valve 23 to a stroke simulator 24 that generates reaction force corresponding to the operating force with which the brake pedal 12 is depressed by the driver. The electromagnetic valve 23 is a so-called normally closed linear valve which is closed when no current is being supplied and opens when current is supplied when a depression operation of the brake pedal 12 by the driver is detected.

A right front wheel brake pressure control line 16 is connected at one end to one output port of the master cylinder 14, and at the other end to a right front-wheel wheel cylinder 20FR that applies braking force to a right front wheel. Similarly, a left front wheel brake pressure control line 18 is connected at one end to another output port of the master cylinder 14, and at the other end to a left front-wheel wheel cylinder 20FL that applies braking force to a left front wheel.

A right master valve 22FR is provided midway in the brake pressure control line 16, and a left master valve 22FL is provided midway in the brake pressure control line 18. The right master valve 22FR and the left master valve 22FL are both normally open linear valves which close ,to cut off communication between the right front-wheel wheel cylinder 20FR or the left front-wheel wheel cylinder 20FL and the master cylinder 14 when current is being supplied, and open to allow communication between the right front-wheel wheel cylinder 20FR or the left front-wheel wheel cylinders 20FL and the master cylinder 14 when the supply of current is reduced or stopped. Hereinafter, the right master valve 22FR and the left master valve 22FL will be collectively referred to as "master valves 22" where appropriate.

Further, a right master pressure sensor 48FR that detects the master cylinder pressure on the right front wheel side is provided midway in the brake pressure control line 16. Similarly, a left master pressure sensor 48FL that detects the master cylinder pressure on the left front wheel side is provided midway in the brake pressure control line 18. With the brake control system 10, when the driver depresses the brake pedal 12, the depression amount is detected by the stroke sensor 46. However, the force with which the brake pedal 12 is depressed (i.e., the depression force) can also be obtained from the master cylinder pressure detected by the right master pressure sensor 48FR and the left master pressure sensor 48FL As a failsafe against potential problems such as failure of the stroke sensor 46, an electronic control unit (hereinafter, referred to as "ECU") 200 monitors the master cylinder pressure using the detection results from both the right master pressure sensor 48FR and the left master pressure sensor 48FL.

One end of a hydraulic pressure supply and discharge line 28 is connected to the reservoir 26. The other end of this hydraulic pressure supply and discharge line 28 is connected to an inlet of a pump 34 which is driven by a motor 32. An outlet of the pump 34 is connected to a high pressure line 30. An accumulator 50 and a relief valve 53 are also connected to this high pressure line 30. In this first example embodiment, the pump 34 is a reciprocating pump which has at least two pistons, not shown, that are driven in a reciprocating fashion by the motor 32. Also, the accumulator 50 in this example embodiment is an accumulator that converts the pressure energy of the brake fluid into pressure energy of a filler gas such as nitrogen and stores it.

The accumulator 50 stores brake fluid that has been pressurized to approximately 14 to 22 MPa, for example, by the pump 34. Further, a valve outlet of the relief valve 53 is connected to the hydraulic pressure supply and discharge line 28 such that if the pressure of the brake fluid in the accumulator 50 becomes abnormally high, e.g., approximately 25 MPa, the relief valve 53 will open to return the high-pressure brake fluid to the hydraulic pressure supply and discharge line 28. Moreover, an accumulator pressure sensor 51 that defects the outlet pressure of the accumulator 50, i.e., the pressure of the brake fluid in the accumulator 50, is provided in the high pressure line 30.

The high pressure line 30 is connected to a right front-wheel wheel cylinder 20FR via a right front wheel pressure increase valve 40FR, a left front-wheel wheel cylinder 20FL via a left front wheel pressure increase valve 40FL, a right rear-wheel wheel cylinder 20RR via a right rear wheel pressure increase valve 40RR, and a left rear-wheel wheel cylinder 20RL via a left rear wheel pressure increase valve 40RL. Hereinafter, these wheel cylinders 20FL to 20RL will collectively be referred to as "wheel cylinders 20" where appropriate, and these pressure increase valves 40FL to 40RL will collectively be referred to as "pressure increase valves 40" where appropriate. The pressure increase valves 40 are all so-called normally closed linear valves (electromagnetic valves) which are closed so that the wheel cylinder pressure will not increase when current is not being supplied, and open to increase the wheel cylinder pressure when current is supplied.

The right front-wheel wheel cylinder 20FR is connected to a right front wheel pressure decrease valve 42FR, the left front-wheel wheel cylinder 20FL is connected to a left front wheel pressure decrease valve 42FL, the right rear-wheel wheel cylinder 20RR is connected to a right rear wheel pressure decrease valve 42RR, and the left rear-wheel wheel cylinder 20RL is connected to a left rear wheel pressure decrease valve 42RL Hereafter, these pressure decrease valves will collectively be referred to as "pressure decrease valves 42" where appropriate.

The right front wheel pressure decrease valve 42FR and the left front wheel pressure decrease valve 42FL are so-called normally closed linear valves (electromagnetic valves) which are closed so that the wheel cylinder pressure will not decrease when no current is being supplied, and open to decrease the wheel cylinder pressure when current is supplied. On the other hand, the left rear wheel pressure decrease valve 42RL and the right rear wheel pressure decrease valve 42RR are so-called normally open linear valves (electromagnetic valves) which are closed so that the wheel cylinder pressure will not decrease when current is being supplied, and open to decrease the wheel cylinder pressure when the supply of current is reduced or stopped.

Also, a right front-wheel wheel cylinder pressure sensor 44FR that detects the pressure in the right front-wheel wheel cylinder 20FR is provided in a pressure line near that wheel cylinder 20FR, a left front-wheel wheel cylinder pressure sensor 44FL that detects the pressure in the left front-wheel wheel cylinder 20FL is provided in a pressure line near that wheel cylinder 20FL, a right rear-wheel wheel cylinder pressure sensor 44RR that detects the pressure in the right rear-wheel wheel cylinder 20RR is provided in a pressure line near that wheel cylinder 20RR, and a left rear-wheel wheel cylinder pressure sensor 44RL that detects the pressure in the left rear-wheel wheel cylinder 20RL is provided in a pressure line near that wheel cylinder 20RL. Hereinafter, these wheel cylinder pressure sensors 44FR to 44RL will be collectively referred to as "wheel cylinder pressure sensors 44" where appropriate.

The master cutoff valves 22, the pressure increase valves 40, the pressure decrease valves 42, the pump 34, the accumulator 50, the master pressure sensors 48, the wheel cylinder pressure sensors 44, and the accumulator pressure sensor 51 and the like together make up a hydraulic actuator 80. The operation of this hydraulic actuator 80 is controlled by the ECU 200.

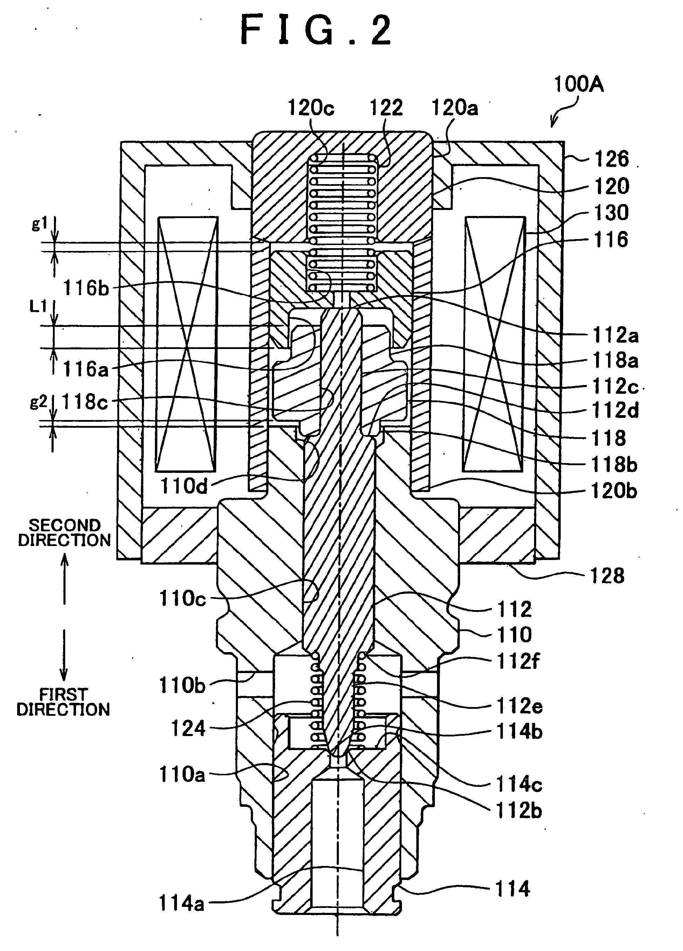

FIG 2 is a sectional view showing in detail the structure of a normally closed electromagnetic valve 100A in the brake control system 10 according to the first example embodiment. This normally closed electromagnetic valve 100A is used for the right front wheel pressure decrease valve 42FR and the left front wheel pressure decrease valve 42FL. Incidentally, the normally closed electromagnetic valve 100A may also be used for other normally closed electromagnetic valves. This normally closed electromagnetic valve 100A includes a guide 110, a rod 112, a seat 114, a first armature 116, a second armature 118, a sleeve 120, a first spring 122, a second spring 124, a coil yoke 126, a ring yoke 128, and a coil 130. The second armature 118 is an example of a movable member of the invention, and the first spring 122 is an example of urging means of the invention.

The guide 110 is a column-shaped magnetic body, which has a seat fitting hole 110a formed in one end from generally the center in the axial direction, and a rod sliding hole 110c formed in the other end on the same axis as the central axis of the guide 110, which extends through to the seat fitting hole 110a. An insertion hole 110d (one example of a "first portion" of the invention) having an inner diameter that is slightly larger than the rod sliding hole 110c is formed in the end portion on the end where the rod sliding hole 110c opens to the outside. Also, a hydraulic fluid path 110b is formed in the guide 110. This hydraulic fluid path 110b extends in the radial direction from the inside wall of the seat fitting hole 110a aU the way through to the outside wall of the guide 110. The hydraulic fluid path 110b is communicated with the hydraulic pressure supply and discharge line 28, and leads hydraulic fluid that has been discharged from a hydraulic fluid path 114a to the reservoir 26 via the hydraulic pressure supply and discharge line 28.

The seat 114 is a column-shaped nonmagnetic body, but it may also be a column-shaped magnetic body. A spring accommodating hole 114c with a bottom is formed having the same axis as the central axis in one end of the seat 114. The hydraulic fluid path 114a also having the same axis as the central axis is formed on the other end of the seat 114. The hydraulic fluid path 114a extends from the end portion where the spring accommodating hole 114c is not formed to the spring accommodating hole 114c, and narrows at one point between the two. A valve seat 114b is formed on a boundary portion between the bottom portion of the spring accommodating hole 114c and the hydraulic fluid path 114a at the narrow point. The inner diameter of the seat fitting hole 110a is substantially similar to the outer diameter of the seat 114 such that the seat 114 fits tightly into the guide 110 so as not to slip out. Incidentally, the seat 114 is inserted with the end portion having the spring accommodating hole 114c positioned toward the rod sliding hole 110c.

The rod 112 has a first thin shaft portion 112c having an outer diameter that is smaller than a center portion of the rod 112, provided near a first end portion 112a of the rod 112. A first annular retaining portion 112d is formed at the boundary portion between the center portion of the rod 112 and the first thin shaft portion 112c. Also, the rod 112 is formed of a nonmagnetic body. The rod 112 also has second thin shaft portion 112e having an outer diameter that is smaller than the center portion of the rod 112, provided near a second end portion 112b of the rod 112. A second annular retaining portion 112f is formed at the boundary portion between the center portion of the rod 112 and the second thin shaft portion 112e.

The rod 112 is slidably inserted in the axial direction into the rod sliding hole 110c of the guide 110 such that the second end portion 112b of the rod 112 faces the valve seat 114b of the seat 114. Hereinafter, the axial direction in which the rod 112 faces the valve seat 114b of the seat 114 will be referred to as the "first direction", and the axial direction in which the rod 112 faces away from the valve seat 114b of the seat 114 will be referred to as the "second direction". The second spring 124 is arranged between the bottom portion of the spring accommodating hole 114c and the second retaining portion 112f of the rod 112 in a compressed state so as to apply urging force to the rod 112, pushing it in the second direction. Incidentally, the second spring 124 may be omitted and the normally closed electromagnetic valve 100A may instead by opened by the pressure of hydraulic fluid in the hydraulic fluid path 114a of the seat 114.

The second armature 118 is a column-shaped magnetic body. An insertion hole 118c is formed extending through the second armature 118 in the axial direction such that the axis is the same as the central axis. A first shaft portion 118a having an outer diameter that is smaller than that of the center portion of the second armature 118 is formed near one end portion of the second armature 118, and a second shaft portion 118b also having an outer diameter that is smaller than that of the center portion of the second armature 118 is formed near the other end portion of the second armature 118. An insertion hole 118c has an inner diameter that is slightly larger than the outer diameter of the first thin shaft portion 112c of the rod 112. The second armature 118 is fixed to the rod 112 by being fit onto the first thin shaft portion 112c of the rod 112 with the end portion on the second shaft portion 118b side positioned on the first direction side. As a result, the second armature 118 is able to move together with the rod 112 in the axial direction.

While the second end portion 112b of the rod 112 is seated against the valve seat 114b of the seat 114, the first retaining portion 112d of the rod 112 is positioned farther toward the first direction side than the end portion, on the second direction side, of the guide 110, yet farther toward the second direction side than the bottom portion of the insertion hole 110d of the guide. The second armature 118 is retained by the first thin shaft portion 112c of the rod 112 fitting into the insertion hole 118c and the end portion on the second shaft portion 118b side abutting against the first retaining portion 112d of the rod 112. Accordingly, the second shaft portion 118b is accommodated in the insertion hole 110d of the guide 110. At this time, the second armature 118 is retained with a slight distance between it and the guide 110 so that it does not abut against the guide 110. Hereinafter, the distance between the opposing surfaces of the second armature 118 and the guide 110 which are perpendicular to the axial direction will be referred to as "second gap g2".

The first armature 116 is a column-shaped magnetic body. An accommodating hole 116a having a bottom and is provided on the same axis as the central axis in a one end portion of the first armature 116. Also, a spring accommodating hole 116b also having the same axis as the central axis is provided in the other end portion of the first armature 116. The first armature 116 is arranged on the second direction side of the second armature 118 on the same axis as the rod 112. At this time, the first armature 116 is arranged such that the accommodating hole 116a is on the first direction side. The first thin shaft portion 112c of the rod 112 is longer in the axial direction than the second armature 118. Therefore, the first armature 116 is retained by abutting against the first end portion 112a of the rod 112. The accommodating hole 116a of the first armature 116 has an inner diameter that is larger than the outer diameter of the first shaft portion 118a of the second armature 118, and the second armature 118 is accommodated in this accommodating hole 116a. In this way, the first armature 116 has an overlapping portion L1 and the second armature 118 has an overlapping portion L1, and these overlapping portions L1 adjacently overlap each other when viewed from the radial direction. The radial direction is the direction orthogonal to the axial direction, i.e., orthogonal to the first and second directions.

A sleeve 120 has a guide portion 120b, which is a thin cylindrical nonmagnetic body, integrally joined on the same axis with a main body portion 120a which is a column-shaped magnetic body. The first armature 116 and the second armature 118 are inserted into the guide portion 120b of the sleeve 120, and then the end portion (one example of a "second portion" of the invention), on the second direction side, of the guide 110 is fitted into the tip end portion of the guide portion 120b, thereby fixing the sleeve 120 to the guide 110. The guide portion 120b has an inner diameter that is slightly larger than the outer diameter of the second armature 118 such that the second armature 118 is able to move in the axial direction inside the guide portion 120b while being guided by the inner peripheral surface of the guide portion 120b. Hereinafter, the distance between the opposing surfaces of the first armature 116 and the sleeve 120 which are perpendicular to the axial direction will be referred to as "first gap g1".

A spring accommodating hole 120c with a bottom is provided on the end portion of the main body portion 120a of the sleeve 120 where the guide portion 120b is provided. One end of a compressed first spring 122 abuts against the bottom portion of the spring accommodating hole 120c and the other end of the first spring 122 abuts against the bottom portion of the spring accommodating hole 116b of the first armature 116 so as to apply urging force on the first armature 116 in the first direction. Incidentally, the spring constants of the first spring 122 and the second spring 124 are set such that the urging force of the first spring 122 is stronger than the urging force of the second spring 124. Therefore, in a normal state, the rod 112 is pushed in the first direction by the urging force of the first spring 122 so that the second end portion 112b abuts against the valve seat 114b, thereby closing the valve so that communication between the hydraulic fluid path 114a and the hydraulic fluid path 110b is cut off.

The coil 130 is wound around the outside of the first armature 116 and the second armature 118. The coil yoke 126 is a cylindrical magnetic body, and the ring yoke 128 is a disc-shaped magnetic body which is fixed to the guide 110 by the outer periphery of the guide 110 being fitted into the insertion hole in the center of the ring yoke 128. The coil yoke 126 is arranged encasing the coil 130, and is attached to both the main body portion 120a of the sleeve 120 and the ring yoke 128. In this way, the outer periphery of the coil 130 is covered by the coil yoke 126 and the ring yoke 128 which are magnetic bodies.

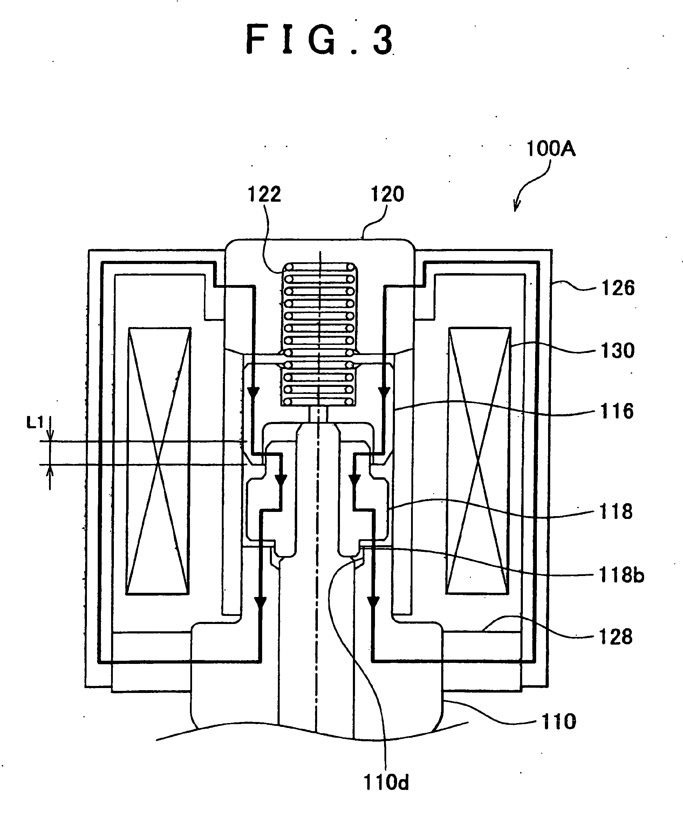

FIG 3 is a view showing the path of magnetic flux of the normally closed electromagnetic valve 100A according to the first example embodiment. FIG. 3 is a sectional view of the normally closed electromagnetic valve 100A which is similar to FIG 2 but with the slanted lines and the like omitted to show the path of magnetic flux.

In the normally closed electromagnetic valve 100A, the main body portion 120a of the sleeve 120, the first armature 116, the second armature 118, the guide 110, the ring yoke 128, and the coil yoke 126 are all magnetic bodies. Therefore, the magnetic flux that has passed through the sleeve 120 first travels in the axial direction to the first armature 116. Having the magnetic flux travel in the axial direction in this way generates a strong attraction force between the sleeve 120 and the first armature 116, which moves the first armature 116 smoothly in the second direction. As a result, the urging force from the first spring 122 on the rod 112 can be easily cancelled. This attraction force in the first example embodiment refers to the force applied by electromagnetic force and magnetic force.

Next, the magnetic flux from the first armature 116 travels to the second armature 118. Because the first armature 116 and the second armature 118 have the overlapping portions L1 that adjacently overlap each other when viewed from the radial direction, the magnetic flux at this time travels in the radial direction instead of in the axial direction. Having the magnetic flux travel in the radial direction in this way suppresses the attraction force generated between the first armature 116 and the second armature 118, thus enabling the first armature 116 and the second armature 118 to move smoothly.

Next, the magnetic flux travels from the second armature 118 to the guide 110. At this time, the magnetic flux that has passed through the second armature 118 travels toward the guide 110 in the axial direction. Meanwhile, as described above, the insertion hole 110d is provided in the guide 110, and the second shaft portion 118b of the second armature 118 is accommodated in this insertion hole 110d. Therefore, the opposing surfaces of the second armature 118 and the guide 110 that are perpendicular to the axial direction are appropriately smaller so the attraction force generated between the second armature 118 and the guide 110 becomes appropriately larger. The magnetic flux that has traveled to the guide 110 then passes through the ring yoke 128 and the coil yoke 126 and back to the sleeve 120 again.

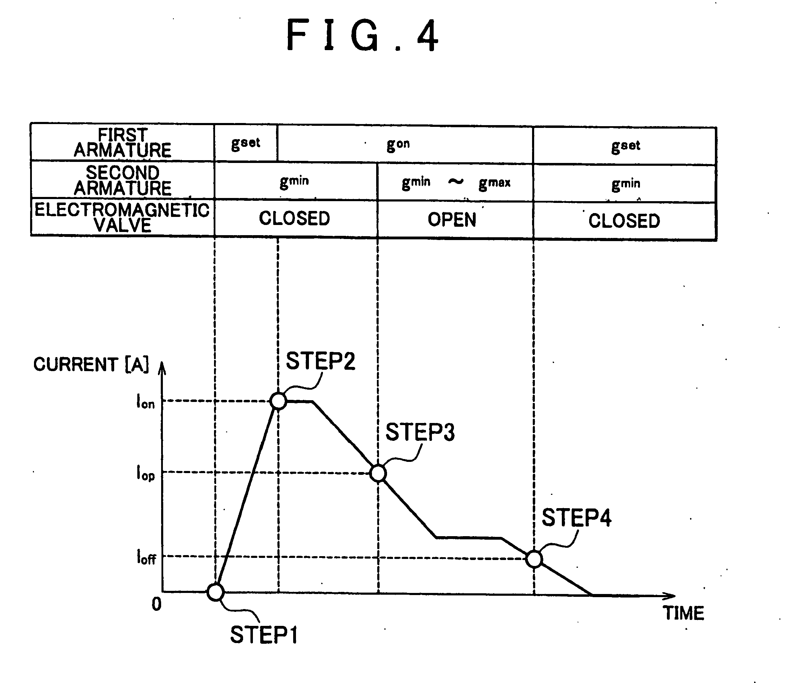

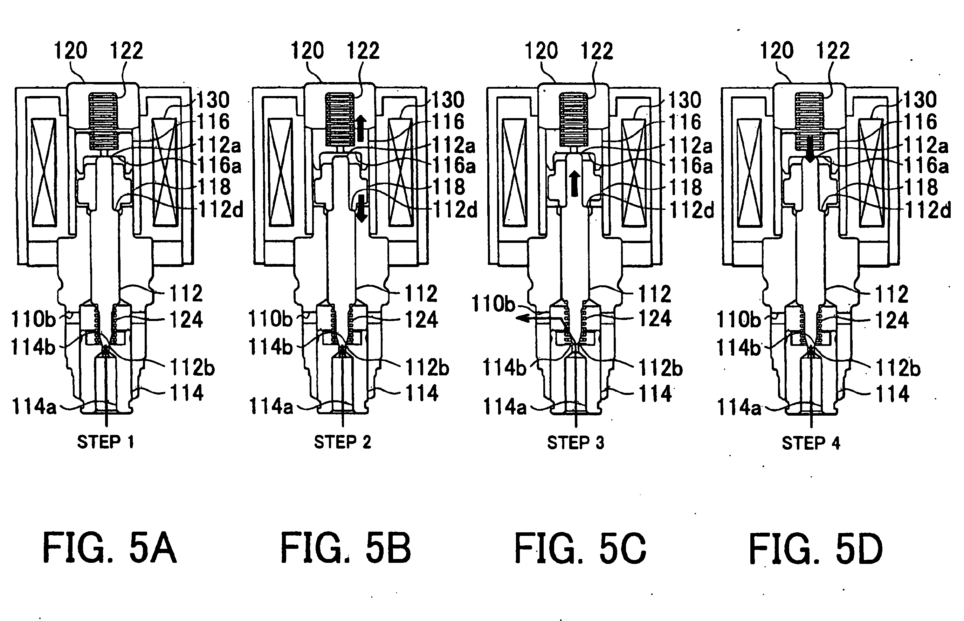

FIG 4 is a chart showing one example of change over time in current supplied to the coil 130 from STEP 1 to STEP 4 of the normally closed electromagnetic valve 100A, the position of the first armature 116 at each point, the position of the second armature 118 at each point, and the open/closed state of the normally closed electromagnetic valve 100A at each point. Also, FIGS. 5A to 5D are views showing the states of the normally closed electromagnetic valve 100A at STEP 1 to STEP 4. Hereinafter, the operation of the normally closed electromagnetic valve 100A will be described in detail with reference to FIGS. 4 and 5A to 5D.

As shown in FIG 4, at STEP 1 no current is being supplied to the coil 130 so no electromagnetic force is applied to the first armature 116 or the second armature 118. As shown in FIG 5, the urging force of the first spring 122 causes the first armature 116 to push the first end portion 112a of the rod 112 in the first direction with the bottom portion of the accommodating hole 116a such that the second end portion 112b of the rod 112 is seated on the valve seat 114b. This closes the normally closed electromagnetic valve 100A so that communication from the hydraulic fluid path 114a to the hydraulic fluid path 110b is cut off. The position of the first armature 116 at this time will be referred to as "first armature SET position gset".

At STEP 2 the ECU 200 supplies current to the coil 130 to move the first armature 116 in the second direction until the first gap g1 becomes zero. The current at this time is designated as a first armature ON current Ion, and the position of the first armature 116 at this time is designated as a first armature ON position gon. As a result, the urging force from the first spring 122 applied to the rod 112 is cancelled. Incidentally, the current supplied to the coil 130 can also be perceived as magnetomotive force NI. At this time, electromotive force is applied to the second armature 118 in the first direction which pushes the rod 112 in the first direction such that the second end portion 112b of the rod 112 abuts against the valve seat 114b. As a result, the normally closed electromagnetic valve 100A remains closed, as shown in FIG 5B. The position of the second armature 118 at this time is designated as a second armature lowest position gmin.

At STEP 3 the ECU 200 reduces the current supplied to the coil 130 until the normally closed electromagnetic valve 100A opens. The current when the normally closed electromagnetic valve 100A opens is designated as a valve opening current lop. When the valve opening current Iop is supplied to the coil 130, the first armature 116 remains in the first armature ON position gon from the attraction force between it and the sleeve 120. Meanwhile, the second armature 118 is in a state in which the electromagnetic force in the first direction is balanced with the urging force from the second spring 124 and the reaction force from the pressure of the hydraulic fluid in the hydraulic fluid path 114a. As a result, the second end portion 112b of the rod 112 is lifted off of the valve seat 114b so that hydraulic fluid starts to flow out into the hydraulic fluid path 110b, as shown in FIG 5C.

When the current supplied to the coil 130 is reduced even further, the rod 112 slides in the second direction until the first end portion 112a of the rod 112 abuts against the bottom portion of the accommodating hole 116a of the first armature 116 so that the normally closed electromagnetic valve 100A is fully open. The position of the second armature 118 at this time is designated as a second armature highest position gmax. When the current supplied to the coil 130 is smaller than the valve opening current Iop but greater than a valve closing current Ioff, the second armature 118 moves , between the second armature lowest position gmin and the second armature highest position gmax. More specifically, the second armature 118 approaches the second armature highest position gmax as the current supplied to the coil 130 decreases, and approaches the second armature lowest position gmin as the current supplied to the coil 130 increases. The ECU 200 adjusts the degree to which the normally closed electromagnetic valve 100A is open according to the current supplied to the coil 130 in this way. Also, when closing the normally closed electromagnetic valve 100A again, the ECU 200 increases the current supplied to the coil 130 to move the second armature 118 to the second armature lowest position gmin.

. At STEP 4, the ECU 200 closes the normally closed electromagnetic valve 100A by reducing the current supplied to the coil 130 instead of increasing it. The current when the normally closed electromagnetic valve 100A is closed in this way is designated as the valve closing current Ioff. When the valve closing current Ioff is supplied to the coil 130, the force in the second direction, i.e., the sum of the electromagnetic force applied to the first armature 116, the urging force from the second spring 124, and the reaction force from the pressure of hydraulic fluid in the hydraulic fluid path 114a, becomes balanced with the force in the first direction, i.e., the sum of the urging force from the first spring 122 and the electromagnetic force from the second armature 118. Therefore, when a current smaller than the valve closing current Ioff is supplied to the coil 130, the second end portion 112 of the rod 112 abuts against the valve seat 114b, as shown in FIG 5D, such that the normally closed electromagnetic valve 100A closes again.

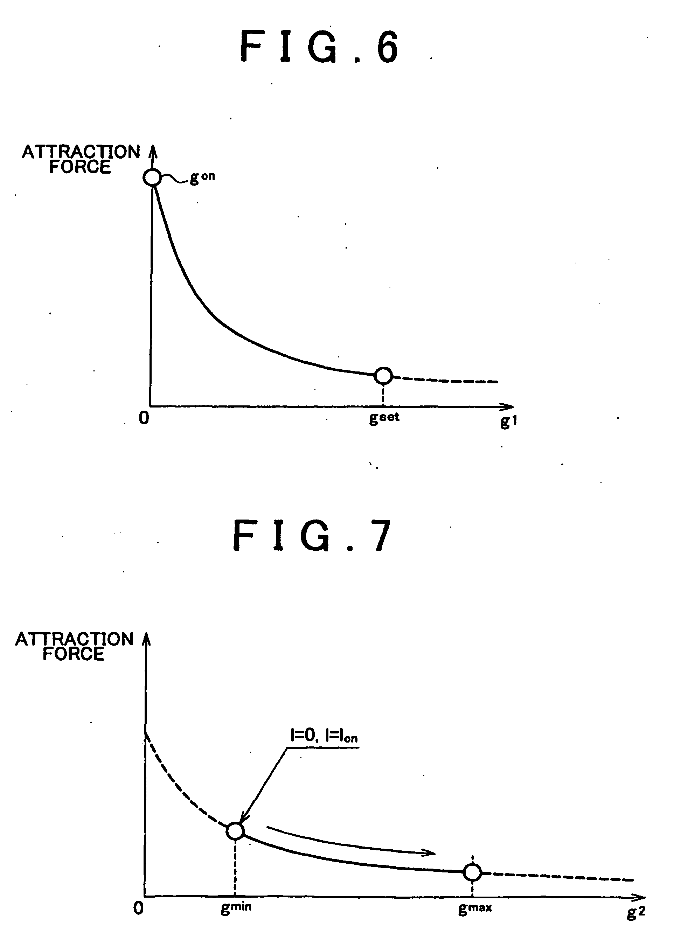

FIG. 6 is a graph showing the relationship between the first gap g1 and the attraction force between the first armature 116 and the sleeve 120. As shown in FIG 6, the attraction force between the first armature 116 and the sleeve 120 abruptly increases as the first armature 116 moves from the first armature SET position gset to the , first armature ON position gown.

FIG 7 is a graph showing the relationship between the second gap g2 and the attraction force between the second armature 118 and the guide 110. As described above, when the current supplied to the coil 130 is zero or the first armature ON current Ion, the second armature 118 is in the second armature lowest position gmin. As shown in FIG 7, the attraction force between the second armature 118 and the guide 110 gradually decreases as the second armature 118 moves from the second armature lowest position gmin toward the second armature highest position gmax.

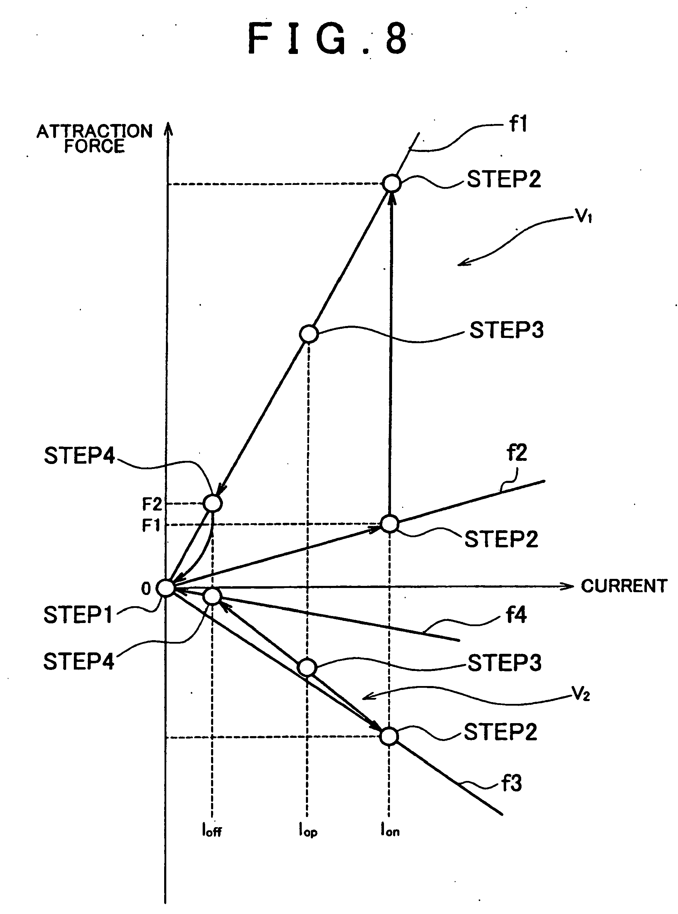

FIG 8 is a graph showing the relationship between the attraction force acting to move the first armature 116 in the second direction, and the attraction force acting to move the second armature 118 in the first direction. The vertical axis in FIG 8 indicates that the force acting in the first direction becomes increasingly stronger farther above the point of origin, and the force acting in the second direction becomes increasingly stronger farther below the point of origin.

In FIG 8, arrow V1 in the region above the point of origin indicates a change in the attraction force on the first armature 116 generated between the first armature 116 and the sleeve 120. Arrow V2 in the region below the point of origin indicates a change in the attraction force on the second armature 118 generated between the second armature 118 and the guide 110. Also, characteristic f1 indicates the relationship between the current supplied to the coil 130 and the attraction force applied to the first armature 116 when the first gap g1 is zero. Characteristic f2 indicates the relationship between the current supplied to the coil 130 and the attraction force applied to the first armature 116 with the first gap g1 when the first armature 116 is in the first armature SET position gset. Furthermore, characteristic f3 indicates the relationship between the current supplied to the coil 130 and the attraction force applied to the second armature 118 with the second gap g2 when the second armature 118 is in the second armature lowest position gmin, and characteristic f4 indicates the relationship between the current supplied to the coil 130 and the attraction force applied to the second armature 118 with the second gap g2 when the second armature 118 is in the second armature highest position gmax. Also, F1 indicates the urging force of the first spring 122 when the first armature 116 is in the first armature SET position gset, and F2 indicates the urging force of the first spring 122 when the first armature 116 is in the first armature ON position gon.

When the current supplied to the coil 130 gradually increases from STEP 1 and the attraction force applied to the first armature 116 reaches F1, the first armature 116 starts to move slightly from the first armature SET position gset toward the first armature ON position gon. When this happens, the first gap g1 becomes smaller, and as a result, the attraction force between the first armature 116 and the sleeve 120 abruptly increases. The degree of this increase is greater than the degree of urging force generated by the first spring 122 as it is compressed as a result of the first gap g1 being reduced. Therefore, when the attraction force applied to the first armature 116 reaches F1 the first armature 116 moves to the first armature ON position gon without more current (i.e., a larger amount of current) being applied to the coil 130. Meanwhile, in the second armature 118, the relationship between the current supplied to the coil 130 and the attraction force applied to the second armature 118 changes linearly along f3 until the current supplied to the coil 130 reaches the first armature ON current Ion. As a result, the state changes to that of STEP 2.

From STEP 2 to STEP 3 and STEP 4, the relationship between the current supplied to the coil 130 and the attraction force applied to the first armature 116 changes linearly along characteristic f1. Meanwhile, the relationship between the current supplied to the coil 130 and the attraction force applied to the second armature 118 changes linearly from the point indicating the attraction force when the first armature ON current Ion is supplied, toward the point when the current supplied to the coil 130 is the valve closing current Ioff at characteristic f4.

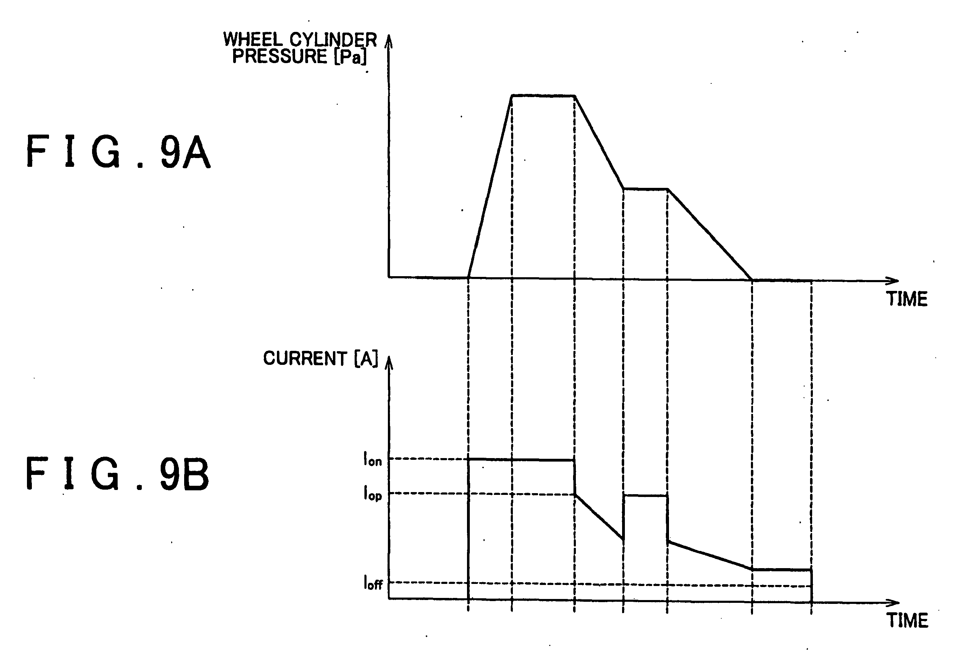

FIG 9A is a graph showing an example of wheel cylinder pressure changing over time, and FIG. 9B is a graph showing the current supplied to the coil when changing the wheel cylinder pressure as shown in FIG 9A in the normally closed electromagnetic valve 100A according to the first example embodiment. Incidentally, to facilitate understanding of the drawings; the times along the horizontal axes in FIGS. 9A and 9B are shown at the same timing. Hereinafter, the example embodiment will be described with reference to FIGS. 9A and 9B.

The ECU 200 supplies current equal to the first armature ON current Ion to the coil 130 to close the normally closed electromagnetic valve 100A so that it is in the state of STEP 2. At this time, when the pressure increase valves 40 are opened and hydraulic fluid is supplied to the wheel cylinders 20, the wheel cylinder pressure increases, and when the pressure increase valves 40 are closed, this wheel cylinder pressure is maintained. Next, the ECU 200 reduces the current supplied to the coil 130 to the valve opening current lop to open the normally closed electromagnetic valve 100A so that it is in the state of STEP 3. Then when ECU 200 gradually reduces the current supplied to the coil 130 even further, the wheel cylinder pressure gradually decreases.

Here, when the current supplied to the coil 130 is increased, the normally closed electromagnetic valve 100A closes so that it is in the state of STEP 2 again such that the wheel cylinder pressure is maintained. At this time, the wheel cylinder pressure is already low so the reaction force pushing back on the rod 112 from the wheel cylinder pressure is weak. Accordingly, the normally closed electromagnetic valve 100A is able to be closed even if the value that increased the current supplied to the coil 130 is lower than the valve opening current lop. When decreasing the wheel cylinder pressure again, the normally closed electromagnetic valve 100A is opened again, but the wheel cylinder pressure at this time is already low so the current supplied to the coil 130 must be reduced to the value right before the valve closes. Opening the normally closed electromagnetic valve 100A in this way enables the wheel cylinder pressure to be gradually reduced again.

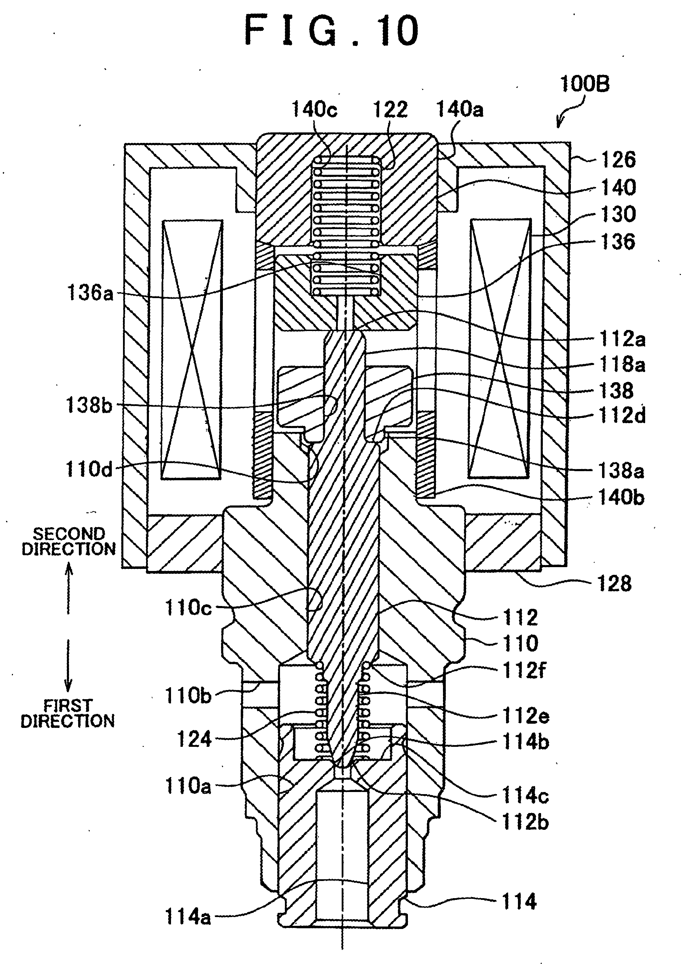

FIG 10 is a sectional view showing in detail the structure of a normally closed electromagnetic valve 100B in the brake control system 10 according to a second example embodiment of the invention. Incidentally, parts of the normally closed electromagnetic valve 100B according to the second example embodiment that are similar to parts of the normally closed electromagnetic valve 100A according to the first example embodiment will be denoted by like reference numerals and descriptions of those parts will be omitted. Also, unless otherwise specified, the method of operation of the normally closed electromagnetic valve 100B is the same as the method of operation of the normally closed electromagnetic valve 100A.

In the normally closed electromagnetic valve 100B, a first armature 136 is provided instead of the first armature 116, and a second armature 138 is provided instead of the second armature 118. The first armature 136 and the second armature 138 are both magnetic bodies. The first armature 136 is generally the same shape as the first armature 116 except for that it is slightly shorter in length than the first armature 116 and does not have the accommodating hole 116a. Thus a spring accommodating hole 136a is the same as the spring accommodating hole 116b of the first armature 116. Also, the second armature 138 is generally similar to the second armature 118 except that it is formed without any portion corresponding to the first shaft portion 118a of the second armature 118. That is, the second armature 138 is similar to the second armature 118 but with the first shaft portion 118a cut off orthogonal to the axial direction. Accordingly, a shaft portion 138a of the second armature 138 is the same as the second shaft portion 118b of the second armature 118, and an insertion hole 138b of the second armature 138 is the same as the insertion hole 118c of the second armature 118.

The sleeve 140 according to the second example embodiment is different from the sleeve 140 in the first example embodiment. More specifically, the portion of the guide portion 140b that connects to the main body portion 140a is a nonmagnetic body, the center portion of the guide portion 140b that overlaps with the first armature 136 and the second armature 138 when viewed from the radial direction is a magnetic body, and the tip end portion of the guide portion 140b is a nonmagnetic body.

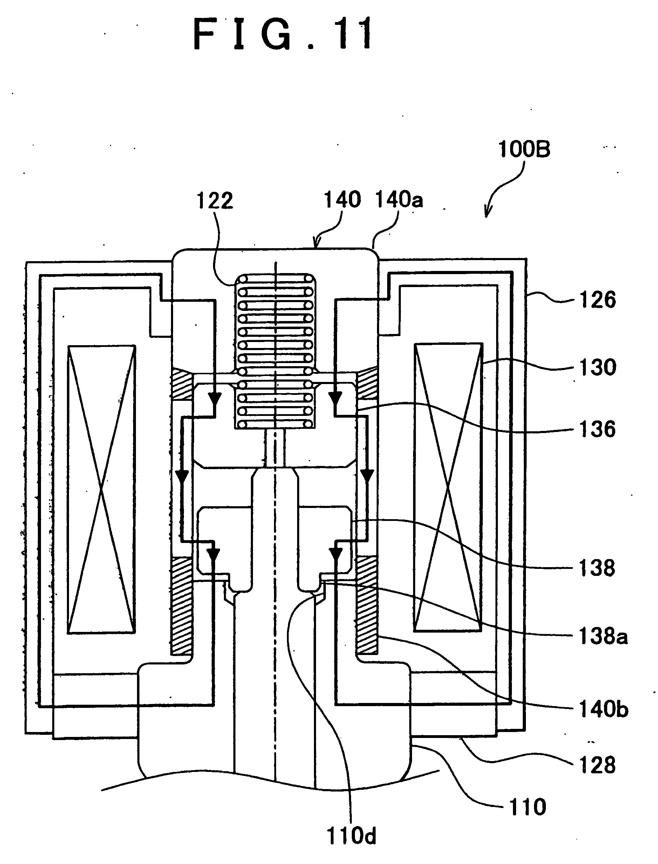

FIG 11 is a view showing the path of magnetic flux of the normally closed electromagnetic valve 100B according to the second example embodiment. FIG 11 is a sectional view of the normally closed electromagnetic valve 100B which is similar to FIG 10 but with the slanted lines and the like omitted to show the path of magnetic flux.

In the normally closed electromagnetic valve 100B, the main body portion 140a of the sleeve 140, the first armature 136, the center portion of the guide portion 140b of the sleeve 140, the second armature 138, the guide 110, the ring yoke 128, and the coil yoke 126 are all magnetic bodies. Therefore, the magnetic flux that has passed through the sleeve 140 first travels to the first armature 136 in the axial direction, and then travels from the first armature 136 to the center portion of the guide portion 140b of the sleeve 140. Having the first armature 136 and the guide portion 140b which adjacently overlap with each other when viewed from the radial direction in this way causes the magnetic flux to travel in the radial direction instead of in the axial direction. Therefore, the guide portion 140b functions as a magnetic flux transmitting member, which is a magnetic body, in which the first armature 136 and the second armature 138 adjacently overlap with each other when viewed from the radial direction. Having the magnetic flux travel in the radial direction in this way suppresses the attraction force generated between the first armature 136 and the second armature 138, which enables the first armature 136 and the second armature 138 to move smoothly.

Also, in the first example embodiment, the magnetic flux travels through the portion where the inner peripheral surface of the accommodating hole 116a of the first armature 116 overlaps with the outer peripheral surface of the first shaft portion 118a of the second armature 118. In the second example embodiment, however, the magnetic flux travels through the portion where the outer peripheral surface of the first armature 136 overlaps with the inner peripheral surface of the guide portion 140b of the sleeve 140. Because the area of this overlapping portion in the second example embodiment is larger than the area of the overlapping portion in the first example embodiment, magnetic saturation is better suppressed which enables the first armature 136 and the second armature 138 to operate more smoothly.

Next, the magnetic flux travels from the center portion of the guide portion 140b of the sleeve 140 to the second armature 138. At this time as well, because the second armature 138 and the guide portion 140b adjacently overlap with each other when viewed from the radial direction, the magnetic flux travels in the radial direction instead of in the axial direction. Having the magnetic flux travel in the radial direction in this way suppresses the attraction force generated between the first armature 136 and the second armature 138. In addition, the magnetic flux travels over a wide area so magnetic saturation is able to be suppressed. The rest of the path along which the magnetic flux travels from the second armature 138 is the same as it is in the first example embodiment described above.

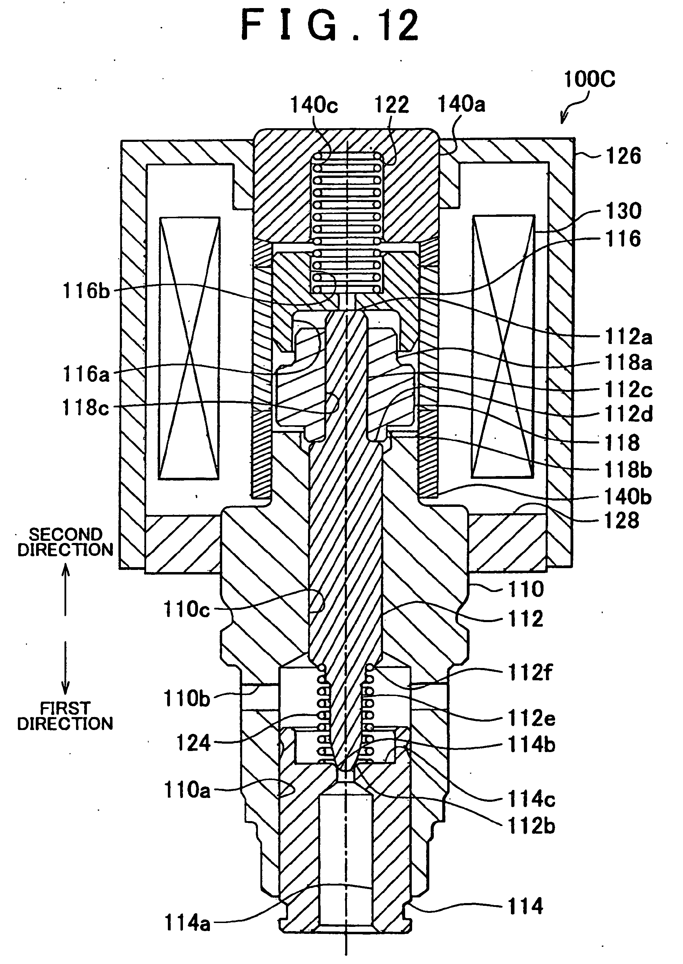

FIG 12 is a sectional view showing in detail the structure of a normally closed electromagnetic valve 100C in the brake control system 10 according to a third example embodiment of the invention. Incidentally, parts of the normally closed electromagnetic valve 100C that are similar to parts of the normally closed electromagnetic valve 100A according to the first example embodiment will be denoted by like reference numerals and descriptions of those parts will be omitted. Also, unless otherwise specified, the method of operation of the normally closed electromagnetic valve 100C is the same as the method of operation of the normally closed electromagnetic valve 100A. Similar to the second example embodiment, the sleeve 140 according to this third example embodiment is such that the portion of the guide portion 140b that connects with the main body portion 140a is a nonmagnetic body, the center portion of the guide portion 140b that adjacently overlaps with the first armature 116 and the second armature 118 when viewed from the radial direction is a magnetic body, and the tip end portion of the guide portion 140b is a nonmagnetic body.

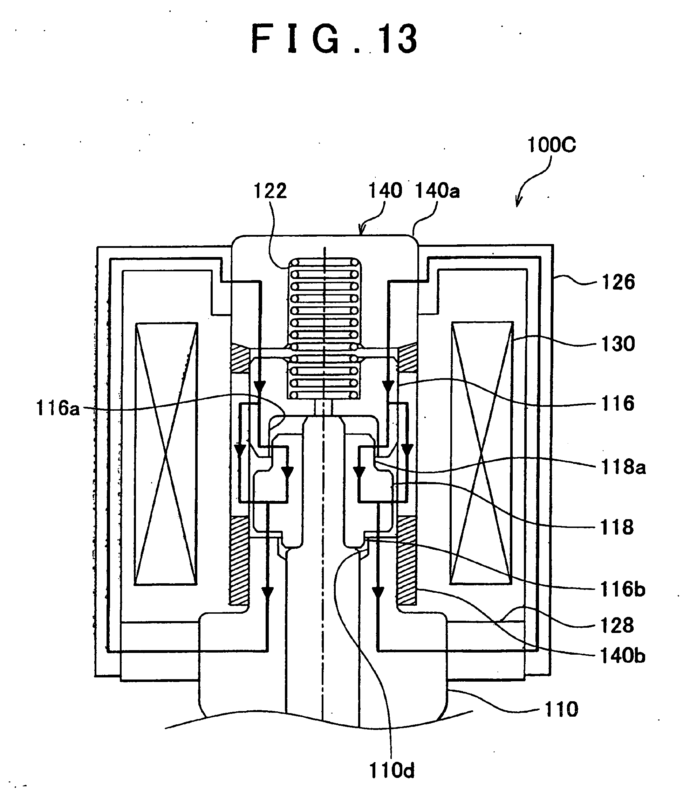

FIG 13 is a view showing the path of magnetic flux of the normally closed electromagnetic valve 100C according to the third example embodiment. FIG 13 is a sectional view of the normally closed electromagnetic valve 100C that is similar to FIG 12 but with the slanted lines and the like omitted to show the path of magnetic flux.

As shown in FIG 13, the path of the magnetic flux in the normally closed electromagnetic valve 100C is a combination of the path of the magnetic flux in the normally closed electromagnetic valve 100A according to the first example embodiment and the path of the magnetic flux in the normally closed electromagnetic valve 100B according to the second example embodiment. Accordingly, the area of the path of the magnetic flux is larger than that each of the normally closed electromagnetic valves of the first and second example embodiments, which further reduces magnetic saturation.

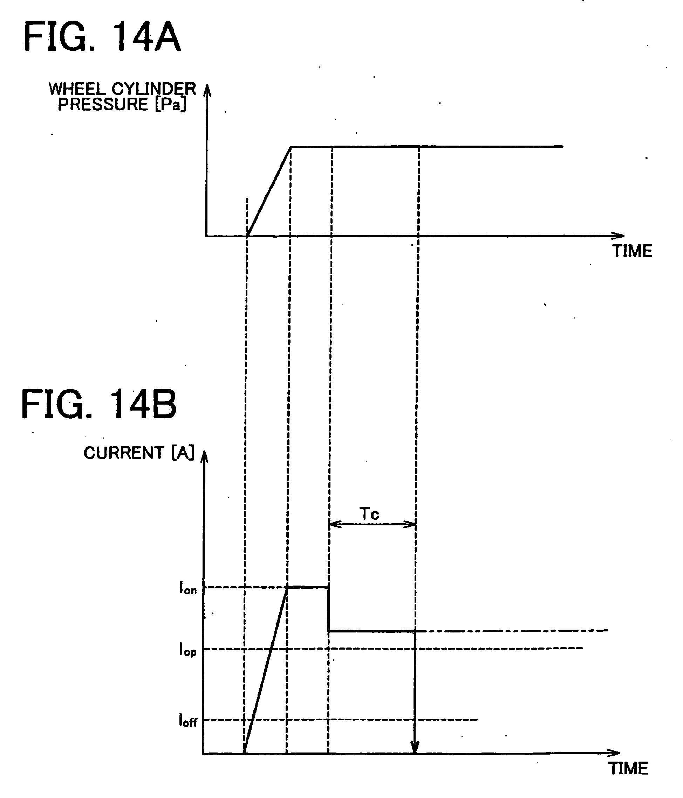

FIG 14A is a graph showing an example of wheel cylinder pressure applied to the wheel cylinders 20, and FIG 14B is a graph showing the current supplied to the coil 130 when obtaining wheel cylinder pressure such as that shown in FIG 14A in the normally closed electromagnetic valve of the brake control system 10 according to a fourth example embodiment of the invention. Incidentally, in the brake control system 10 in the fourth example embodiment, any one of the normally closed electromagnetic valve 100A, the normally closed electromagnetic valve 100B, and the normally closed electromagnetic valve 100C may be used. The rest of the structure of the brake control system 10 is the same as it is in the first example embodiment.

The ECU 200 first sets the current supplied to the coil 130 to the first armature current Ion and closes the normally closed electromagnetic valve so that it is in the state of STEP 2. Then the ECU 200 determines whether the wheel cylinder pressure has not changed for a threshold value time Tc or longer using the detection results of the wheel cylinder pressure sensor 44. If the wheel cylinder pressure has not changed for the threshold value time Tc or longer, it is highly likely that the wheel cylinder pressure is being maintained so the ECU 200 stops supplying current to the coil 130 to close the normally closed electromagnetic valve so that it is in the state of STEP 1, which inhibits an increase in power consumption.

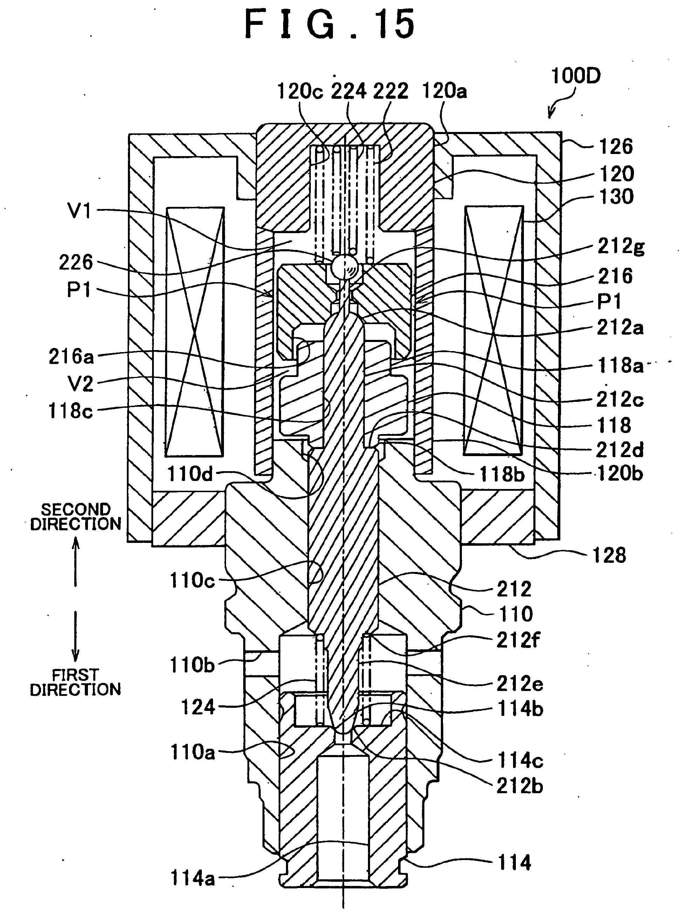

FIG 15 is a sectional view showing in detail the structure of a normally closed electromagnetic valve 100D according to a fifth example embodiment of the invention. Incidentally, other than the normally closed electromagnetic valve 100D being used instead of the normally closed electromagnetic valve described above, the structure of the brake control system 10 is the same as it is described above. Hereinafter, parts of the normally closed electromagnetic valve 100D that are similar to parts of the normally closed electromagnetic valve according to the example embodiment described above will be denoted by like reference numerals and descriptions of those parts will be omitted. Also, unless otherwise specified, the method of operation of the normally closed electromagnetic valve 100D is the same as the method of operation of the normally closed electromagnetic valve described above.

In the normally closed electromagnetic valve 100D, a rod 212 is provided instead of the rod 112, and a first armature 216 is provided instead of the first armature 116. The rod 212 has a first end portion 212a, a second end portion 212b, a first thin shaft portion 212c, a first retaining portion 212d, a second thin shaft portion 212e, a second retaining portion 212f, and a third thin shaft portion 212g. Of these, the second end portion 212b is similar to the second end portion 112b of the rod 112, the first thin shaft portion 212c is similar to the first thin shaft portion 112c of the rod 112, the first retaining portion 212d is similar to the first retaining portion 112d of the rod 112, the second thin shaft portion 212e is similar to the second thin shaft portion 112e of the rod 112, and the second retaining-portion 212f is similar to the second retaining portion 112f of the rod 112. Incidentally, the second end portion 212b functions as a valve body that closes off the hydraulic fluid path when seated on the valve seat 114b, and opens up the hydraulic fluid path when away from the valve seat 114b. The first end portion 212a has a semispherical shape and is integrally joined to the end portion of the first thin shaft portion 212c. The third thin shaft portion 212g has a thin columnar shape that protrudes from the tip of the first end portion 212a on the same axis as the first thin shaft portion 212c. The rod 212 is slidably inserted in the axial direction into the rod sliding hole 110c of the guide 110 such that the second end portion 212b of the rod 212 faces the valve seat 114b of the seat 114.

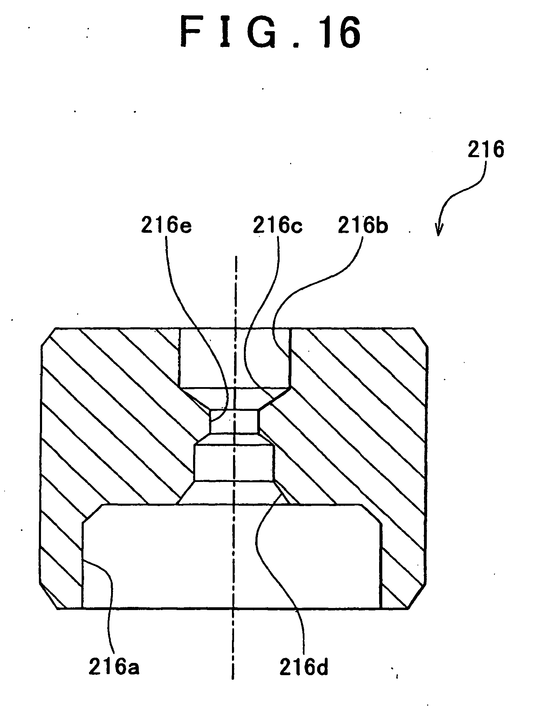

Now, the shape of the first armature 216 will be described in detail with reference to FIG 16. The first armature 216 is a column-shaped magnetic body. An accommodating hole 216a with a bottom is formed having the same axis as the central axis in one end of the first armature 216. A ball accommodating hole 216b is formed having the same axis as the central axis in the other end of the first armature 216. The accommodating hole 216a and the ball accommodating hole 216b are communicated by a flow path 216e. A first valve seat 216c is provided between the ball accommodating hole 216b and the flow path 216e. This first valve seat 216c is tapered so that its diameter gradually decreases from the end portion of the ball accommodating hole 216b. A second valve seat 216d is provided between the accommodating hole 216a and the flow path 216e. This second valve seat 216d is tapered so that its diameter gradually increases toward the bottom portion of the first armature 216.

As shown in FIG 15, the first armature 216 is arranged on the second direction side of the second armature 118 on the same axis as the rod 212. At this time, the first armature 216 is such that the accommodating hole 216a is on the first direction side. Movement of first armature 216 in the first direction is restricted by the second valve seat 216d abutting against the first end portion 212a of the rod 212. The accommodating hole 216a of the first armature 216 has an inner diameter that is larger than the outer diameter of the first shaft portion 118a of the second armature 118. Therefore, when the second valve seat 216d is abutting against the first end portion 212a, part of the first shaft portion 118a is accommodated in the accommodating hole 216a. In this way, the first armature 216 has an overlapping portion and the second armature 118 has an overlapping portion, and these overlapping portions adjacently overlap each other when viewed from the radial direction. Also, a gap is provided between the end surface of the first shaft portion 118a and the bottom surface of the accommodating hole 216a. As a result, magnetic flux is inhibited from travelling between the bottom portion of the accommodating hole 216a and the end portion of the first shaft portion 118a, thereby reducing the attraction force between the first armature 216 and the second armature 118.

When the guide 110 is fitted into the opening of the sleeve 120, a fluid chamber is formed which is filled with hydraulic fluid. Therefore, the sleeve 120 and the guide 110 together function as an accommodating member that forms a fluid chamber in which hydraulic fluid is stored. The first armature 216 is arranged inside the fluid chamber so as to divide the fluid chamber into two sub-chambers. Hereinafter, the sub-chamber on the second direction side will be referred to as the first chamber V1 and the sub-chamber on the first direction side will be referred to as the second sub-chamber V2. The first armature 216 has an outer diameter that is slightly smaller than the inner diameter of the guide portion 120b of the sleeve 120, such that when the first armature 216 is inserted into the guide portion 120b, there is a gap between the outer diameter of the first armature 216 and the inner diameter of the guide portion 120b. This gap functions as a hydraulic fluid flow path that communicates the first sub-chamber V1 with the second sub-chamber V2. Hereinafter, this gap will be referred to as flow path P1. Incidentally, a groove that communicates the first sub-chamber V1 with the second sub-chamber V2 may also be formed in an outer peripheral portion of the first armature 216, and this groove may function in place of the flow path P1 as a hydraulic fluid flow path that communicates the first sub-chamber V1 with the second sub-chamber V2. Alternatively, a through-hole that communicates the first sub-chamber V1 with the second sub-chamber V2 may be formed in the first armature 216, and this through-hole may function in place of the flow path P1 as a hydraulic fluid flow path that communicates the first sub-chamber V1 with the second sub-chamber V2.

Also, the normally closed electromagnetic valve 100D has a first spring 222, a third spring 224, and a ball 226. The first spring 222 is provided in a compressed state with one end abutting against the bottom portion of the spring accommodating hole 120c of the sleeve 120 and the other end abutting against the upper end portion of the first armature 216. As a result, the first, spring 222 applies urging force in the first direction to the first armature 216.

When no current is supplied to the coil 130, the urging force of the first spring 222 causes the first armature 216 to push the rod 212 in the first direction. Therefore, the first armature 216 moves together with the rod 212 in the first direction so that the second end portion 212b becomes seated on the valve seat 114b. When current is supplied to the coil 130, the applied electromagnetic force moves the first armature 216 in the second direction against the urging force of the first spring 222. As a result, the first armature 216 moves away from the rod 212 such that the urging force from the first spring 222 on the rod 212 is cancelled.

The ball 226 is arranged in the ball accommodating hole 216b of the first armature 216. When the second valve seat 216d is abutting against the first end portion 212a, the third thin shaft portion 212g protrudes through the flow path 216e and into the ball accommodating hole 216b. Therefore, movement of the ball 226 in the first direction is restricted by the ball 226 abutting against the upper end of the third thin shaft portion 212g. The third spring 224 is provided in a compressed state, with one end abutting against the bottom portion of the spring accommodating hole 120c of the sleeve 120 and the other end abutting against the ball 226. As a result, the third spring 224 applies urging force in the first direction to the ball 226.

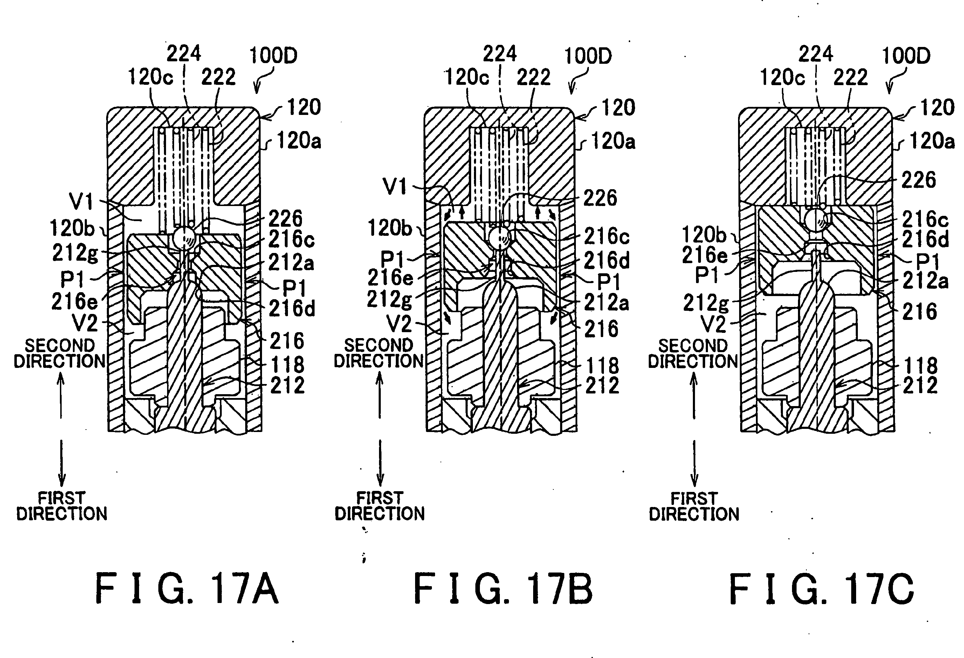

The operation of the normally closed electromagnetic valve 100D when moving from STEP 1 to STEP 2 will first be described with reference to FIGS. 17A to 17C. FIG 17A is a view showing the state of the normally closed electromagnetic valve 100D at STEP 1. At STEP 1, the first armature 216 in a state in which its movement in the first direction is prevented by the second valve seat 216d abutting against the first end portion 212a.

When the first armature ON current Ion is supplied to the coil 130 from the state of STEP 1, the first armature 216, which is a magnetic body, starts to move in the second direction in response to the electromagnetic force that is applied. Meanwhile, the second armature 118, which is also is a magnetic body, pushes the rod 212 in the first direction in response to the electromagnetic force that is applied, such that the valve is kept closed. In the state of STEP 1, the ball 226 is not seated on the first valve seat 216c. Therefore, immediately after the first armature ON current Ion is supplied to the coil 130, the first sub-chamber V1 and the second sub-chamber V2 become communicated via the flow path 216e. Accordingly, when the first armature 216 moves in the second direction, hydraulic fluid in the first sub-chamber V1 can flow out into the second sub-chamber V2 through both the flow path 216e and the flow path P1. Therefore, the flow resistance of the hydraulic fluid decreases, enabling the first armature 216 to move relatively fast. When the first armature 216 moves in the second direction, the urging force from the first spring 222 on the rod 212 in the first direction is cancelled so the second end portions 212b is able to move away from the valve seat 114b.

FIG 17B is a view showing the state of the normally closed electromagnetic valve 100D after a short period of time has passed after the first armature ON current Ion is supplied to the coil from STEP 1. If the first armature 216 continues to rise, the ball 226 will become seated on the first valve seat 216c of the first armature . 216, thereby blocking off the flow path 216e. Even after this, the ball 226 continues to be pushed against the first armature 216 by the urging force of the third spring 224. As a result, when the first armature 216 rises even more, the hydraulic fluid in the first sub-chamber V1 flows out into the second sub-chamber V2 mainly through the flow path P1. Therefore, the flow resistance of the hydraulic fluid is higher than it is in the state shown in FIG 17A so the velocity at which the first armature 216 moves is reduced. In this way, the ball 226 and the third spring 224 together function as flow resistance changing means for increasing the flow resistance of the flow path that communicates the first sub-chamber V1 with the second sub-chamber V2 when the first armature 216 moves in the second direction inside the fluid sub-chamber. Also, the ball 226 also functions as an abutting member that abuts against the armature to block a portion of the flow path that communicates the first sub-chamber V1 with the second sub-chamber V2 when the first armature 216 moves in the second direction inside the fluid chamber.

FIG. 17C is a view showing the state of the normally closed electromagnetic valve 100D when it has reached the state of STEP 2. The first armature 216 continues to move in the second direction from the electromagnetic force that is applied, until it finally abuts against the main body portion 120a of the sleeve 120. Because the first armature 216 rises in response to the electromagnetic force, attraction force is generated between the first armature 216 and the main body portion 120a when the first armature 216 comes close to the main body portion 120a. As a result, the first armature 216 may end up abutting against the sleeve 120 at high velocity. By increasing the flow resistance of the hydraulic fluid between the first sub-chamber V1 and the second sub-chamber V2 by blocking the flow path 216e of the first armature 216 before the first armature 216 abuts against the sleeve 120 in this way, the velocity at which the first armature 216 moves when it abuts against the sleeve 120 can be slowed, thus suppressing an abnormal noise from being produced.

Incidentally, in a typical normally closed electromagnetic valve, an armature that divides a fluid chamber into two sub-chambers may be fixed to a rod on a valve body, and the flow path that communicates these two sub-chambers with one another may be formed in this armature. In this case, a structure may be employed in which the flow resistance of hydraulic fluid between the two sub-chambers is increased by blocking a portion of this flow path with a ball or the like before the armature moves in the second direction and abuts against the sleeve. Also, in a typical normally open electromagnetic valve, an armature that divides a fluid chamber into two sub-chambers may be fixed to a rod on a valve body, and the flow path that communicates the two sub-chambers with each other may be formed in this armature. In this case, a structure may also be employed in which the flow resistance of hydraulic fluid between the two sub-chambers is increased by blocking a portion of this flow path using a ball or the like before the armature moves in the second direction and abuts against the sleeve. Incidentally, a typical normally closed electromagnetic valve and a typical normally open electromagnetic valve are well known so detailed descriptions of their structures will be omitted.

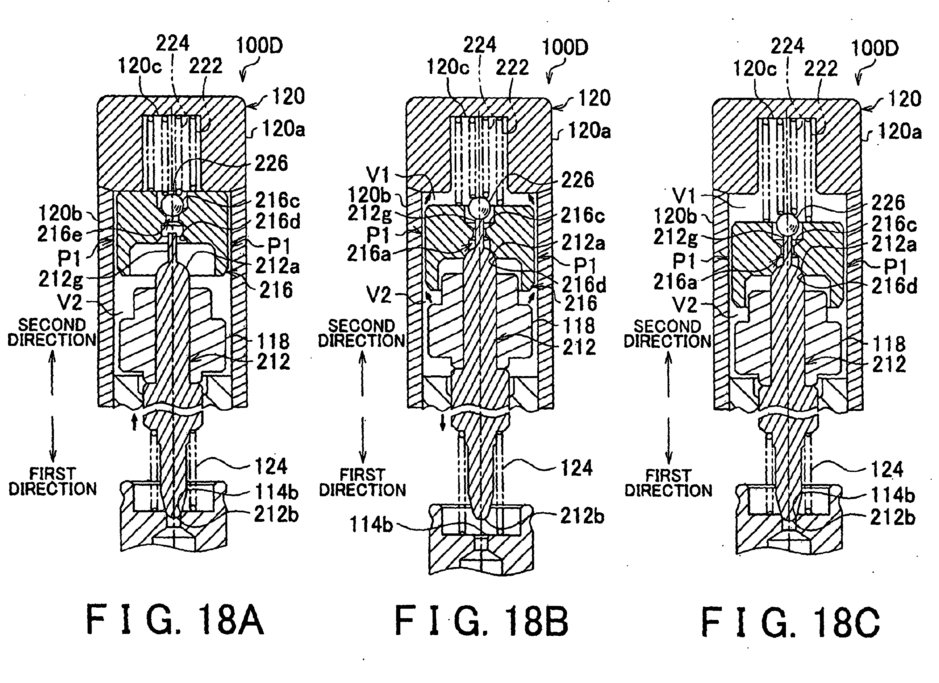

The operation of the normally closed electromagnetic valve 100D when changing from STEP 2 or STEP 3 to STEP 4 will first be described with reference to FIGS. 18A to 18C. At STEP 2 and STEP 3, the positions of the various constituent elements of the normally closed electromagnetic valve 100D are almost the same so an example of the operation of the normally closed electromagnetic valve 100D when it moves from STEP 2 to STEP 4 will be described.

FIG 18A is a view showing the state of the normally closed electromagnetic valve 100D at STEP 2. At STEP 2, the first armature 216 is abutting against the main body portion 120a of the sleeve 120. When current stops being supplied to the coil 130 from this state, the rod 212 starts to move in the second directions from the hydraulic pressure of the hydraulic fluid and the urging force of the second spring 124. On the other hand, the first armature 216 starts to move in the first direction from the urging force of the first spring 222 and the urging force of the third spring 224.

FIG 18B is a view showing the state of the normally closed electromagnetic valve when the rod 212 and the first armature 216 are abutting against one another. Incidentally, the positions of the rod 212 and the first armature 216 when they abut against one another are not limited to the positions shown. Alternatively, for example, the rod 212 may abut against the first armature 216 while the first armature 216 is abutting against the main body portion 120a of the sleeve 120.

The rod 212 abuts against the first armature 216, thereby blocking the flow path 216e, by the first end portion 212a being seated on the second valve seat 216d. The urging force of the first spring 222 is greater than the urging force of the second spring 124 so the first armature 216 moves in the first direction from the urging force of the first spring 222, while pushing the rod 212.

At this time, the hydraulic fluid flows from the second sub-chamber V2 to the first sub-chamber V1 through mainly the flow path P1. As a result, the flow resistance of the hydraulic fluid from the second sub-chamber V2 to the first sub-chamber V1 increases, reducing the velocity at which the armature 216 moves in the first direction. In this way, the rod 212 functions as flow resistance changing means for increasing the flow resistance of the flow path that communicates the first sub-chamber V1 with the second sub-chamber V2 when the first armature 216 moves in the first direction inside the fluid chamber. Moreover, the rod 212 also functions as an abutting member that abuts against the first armature 216 to block a portion of the flow path that communicates the first sub-chamber V1 with the second sub-chamber V2 when the first armature 216 moves in the first direction inside the fluid chamber.

FIG 18C is a view showing the state of the normally closed electromagnetic valve 100D at STEP 4. At STEP 4, the urging force of the first spring 222 and the third spring 224 forces the second end portion 212b of the rod 212 to be seated on the valve seat 114b, thereby closing the normally closed electromagnetic valve 100D. By increasing the flow resistance of the hydraulic fluid from the second sub-chamber V2 to the first sub-chamber V1 by blocking off the flow path 216e before the second end portion 212b is seated on the valve seat 114b in this way, the velocity at which the second end portion 212b moves when it is seated on the valve seat 114b can be slowed, thus suppressing an abnormal noise from being produced.

Incidentally, in a typical normally closed electromagnetic valve, an armature that divides a fluid chamber into two sub-chambers may be fixed to a rod on a valve body, and the flow path that communicates these two sub-chambers with one another may be formed in this armature. In this case, a structure may be employed in which the flow resistance of hydraulic fluid between the two sub-chambers is increased by blocking a portion of this flow path with a ball or the like before the valve body is seated on the valve seat thus closing the valve. Also, in a typical normally open electromagnetic valve, an armature that divides a fluid chamber into two sub-chambers may be fixed to a rod on a valve body, and the flow path that communicates the two sub-chambers with each other may be formed in this armature. In this case, a structure may also be employed in which the flow resistance of hydraulic fluid between the two sub-chambers is increased by blocking a portion of this flow path using a ball or the like before the valve body is seated on the valve seat thus closing the valve. Incidentally, a typical normally closed electromagnetic valve and a typical normally open electromagnetic valve are well known so detailed descriptions of their structures will be omitted.

## Claims

1. A normally closed electromagnetic valve (100A) comprising:
a seat having a valve seat (114b) interposed in a hydraulic fluid path;
a rod (112) which is supported so as to be able to move in a first direction toward the valve seat (114b) as well as in a second direction away from the valve seat (114b), and which closes off the hydraulic fluid path when seated on the valve seat (114b), and opens up the hydraulic fluid path when away from the valve seat (114b);
a first armature (116) which is a magnetic body that is supported so as to be able to move in the first direction and in the second direction;
urging means for urging the first armature (116) in the first direction;
a second armature (118) which is a magnetic body that is supported so as to be able to move in the first direction and in the second direction; and
a coil (130) that is wound around the periphery of the first armature (116),
wherein when current is not being supplied to the coil (130), the first armature (116) pushes the rod (112) in the first direction to seat the rod (112) on the valve seat (114b) using urging force from the urging means, and
when current is being supplied to the coil (130), the first armature (116) moves in the second direction, **characterized in that**
the coil (130) is wound around the periphery of the second armature (118); and
when current is being supplied to the coil (130), the second armature (118) pushes the rod (112) in the first direction with force corresponding to the amount of current supplied to the coil (130).

2. The normally closed electromagnetic valve according to claim 1, wherein when current is being supplied to the coil (130), the first armature (116) moves in the second direction by electromagnetic force applied as a result of the current being supplied to the coil (130), and the second armature (118) pushes the rod (112) in the first direction using electromagnetic force corresponding to the amount of current supplied to the coil (130) such that the rod (112) is either seated on the valve seat (114b) or in a position away from the valve seat (114b).

3. The normally closed electromagnetic valve according to claim 1 or 2, wherein the
first armature (116) has an overlapping portion (L1) and the second armature(118) has an overlapping portion (L1), the overlapping portion of the first armature (116) and the overlapping portion (L1) of the second armature (118) adjacently overlapping each other when viewed from the radial direction.

4. The normally closed electromagnetic valve according to any one of claims 1 to 3, further comprising:
a magnetic flux transmitting member (120b) which is a magnetic body that adjacently overlaps with the first armature (116) and the second armature (118) when viewed from the radial direction.

5. The normally closed electromagnetic valve according to any one of claims 1 to 4, further comprising:
a sleeve (120) which is a magnetic body that is arranged on the second direction side of the first armature (116).

6. The normally closed electromagnetic valve according to claim 5, wherein the first armature (116) is arranged on the second direction side of the rod (112), and one end of the urging means (122) is retained by the sleeve and the other end of the urging means (122) abuts against the first armature (116) so as to urge the first armature (116) in the first direction, and the second armature (118) is arranged on the first direction side of the first armature (116), has an insertion hole (118c) into which the rod (112) is inserted, and is fixed to the rod (112).

7. The normally closed electromagnetic valve according to any one of claims 1 to 6, further comprising:
a guide which i) is a magnetic body, ii) is arranged on the first direction side of the second armature (118), iii) has a first portion that overlaps with the second armature (118) when viewed from the radial direction, and a second portion that overlaps with the second armature (118) when viewed from the first direction, and iv) guides the movement of the rod (112) in the first direction and the second direction.

8. The normally closed electromagnetic valve according to any one of claims 1 to 7, wherein the rod (112) is a nonmagnetic body.

9. The normally closed electromagnetic valve according to any one of claims 1 to 8, wherein the radial direction is a direction that is orthogonal to the first direction and orthogonal to the second direction.

10. The normally closed electromagnetic valve according to any one of claims 1 to 4, further comprising:
an accommodating member (120, 120b) in which is formed a fluid chamber in which hydraulic fluid is stored; and
flow resistance changing means (224, 226),
wherein the first armature (116) is arranged in the fluid chamber so as to divide the fluid chamber into two sub-chambers (V1, V2), and a flow path that communicates the two sub-chambers (V1, V2) with one another is provided in the first armature (216), and the flow resistance changing means increases the flow resistance of hydraulic fluid through the flow path when the first armature (216) moves inside the fluid chamber.

11. The normally closed electromagnetic valve according to claim 10, wherein the accommodation member is formed from
a sleeve (120) which is a magnetic body that is arranged on the second direction side of the first armature (216); and
a guide (120b) which i) is a magnetic body, ii) is arranged on the first direction side of the second armature (118), iii) has a first portion that overlaps with the second armature (118) when viewed from the radial direction, and a second portion that overlaps with the second armature (118) when viewed from the first direction, and iv) guides the movement of the rod (212) in the first direction and a second direction.

12. The normally closed electromagnetic valve according to claim 10 or 11, wherein the flow resistance changing means has an abutting member (226) that increases the flow resistance of hydraulic fluid through the flow path by abutting against the first armature (216) to block a portion of the flow path (216e) when the first armature (216) moves inside the fluid chamber.

13. The normally closed electromagnetic valve according to claim 12, wherein the abutting member (226) abuts against the first armature (216) to block a portion of the flow path (216e) when the first armature (216) moves in at least one direction from among the first direction and the second direction.

14. A brake control system comprising:
the normally closed electromagnetic valve (100A) according to claim 2, wherein
i) the valve seat (114b) is interposed between a wheel cylinder (20) and a hydraulic fluid discharge path (110b), and
ii) the rod (112) closes off communication between the wheel cylinder and the hydraulic fluid discharge path to suppress a decrease in wheel cylinder pressure when seated on the valve seat (114b), and opens up communication between the wheel cylinder (20) and the hydraulic fluid discharge path (110b) to decrease the wheel cylinder pressure when away from the valve seat (114b); and
wheel cylinder pressure controlling means (200) for controlling current supplied to the coil (130), wherein the wheel cylinder pressure controlling means stops the supply of current to the coil (130) when it is predicted that the decrease in the wheel cylinder pressure will continue to be suppressed.

15. The brake control system according to claim 14, wherein the wheel cylinder pressure controlling means 200 predicts that the decrease in the wheel cylinder pressure will continue to be suppressed and stops the supply of current to the coil (130) when the wheel cylinder pressure has continued to be constant for a predetermined period of time or longer.

## Patentansprüche

1. Normalerweise geschlossenes elektromagnetisches Ventil (100A), welches aufweist:
einen Sitz mit einem Ventilsitz (114b), der in einem hydraulischen Fluidpfad angeordnet ist;
eine Stange (112), die gelagert ist, um sich in eine erste Richtung hin zum Ventilsitz (114b) sowie in eine zweite Richtung weg von dem Ventilsitz (114b) bewegen zu können, und den hydraulischen Fluidpfad verschließt, wenn sie auf dem Ventilsitz (114b) sitzt, und den hydraulischen Fluidpfad öffnet, wenn sie von dem Ventilsitz (114b) entfernt ist;
einen ersten Anker (116), der ein magnetischer Körper ist, der so gelagert ist, dass er sich in die erste Richtung und in die zweite Richtung bewegen kann;
Vorspannmittel zum Vorspannen des ersten Ankers (116) in die erste Richtung;
einen zweiten Anker (118), der ein magnetischer Körper ist, der so gelagert ist, dass er sich in die erste Richtung und in die zweite Richtung bewegen kann; und
eine Spule (130), die um den Umfang des ersten Ankers (116) gewickelt ist, wobei, wenn der Spule (130) kein Strom zugeführt wird, der erste Anker (116) unter Verwendung der Vorspannkraft von den Vorspannmitteln die Stange (112) in die erste Richtung drückt, um die Stange (112) auf den Ventilsitz (114) zu setzen, und
wenn der Spule (130) Strom zugeführt wird, sich der erste Anker (116) in die zweite Richtung bewegt, **dadurch gekennzeichnet, dass**
die Spule (130) um den Umfang des zweiten Ankers (118) gewickelt ist; und,
wenn der Spule (130) Strom zugeführt wird, der zweite Anker (118) die Stange (112) mit einer Kraft, die der der Spule (130) zugeführten Strommenge entspricht, in die erste Richtung drückt.

2. Normalerweise geschlossenes elektromagnetisches Ventil gemäß Anspruch 1, wobei, wenn der Spule (130) Strom zugeführt wird, sich der erste Anker (116) aufgrund einer angebrachten elektromagnetischen Kraft in Folge des der Spule (130) zugeführten Stroms in die zweite Richtung bewegt und der zweite Anker (118) mit Hilfe der elektromagnetischen Kraft, die der der Spule (130) zugeführten Strommenge entspricht, die Stange (112) in die erste Richtung drückt, so dass die Stange (112) entweder auf dem Ventilsitz (114b) sitzt oder von dem Ventilsitz (114b) entfernt ist.

3. Normalerweise geschlossenes elektromagnetisches Ventil gemäß Anspruch 1 oder 2, wobei der erste Anker (116) einen Überlappungsabschnitt (L1) hat und der zweite Anker (118) einen Überlappungsabschnitt hat (L1), wobei sich der Überlappungsabschnitt des ersten Ankers (116) und der Überlappungsabschnitt (L1) des zweiten Ankers (118) von radialer Richtung aus gesehen nebeneinander überlappen.

4. Normalerweise geschlossenes elektromagnetisches Ventil gemäß einem der Ansprüche 1 bis 3, welches ferner aufweist:
ein Magnetflussübertragungsteil (120b), das ein magnetischer Körper ist, der von radialer Richtung aus gesehen nebeneinander mit dem ersten Anker (116) und dem zweiten Anker (118) überlappt.

5. Normalerweise geschlossenes elektromagnetisches Ventil gemäß einem der Ansprüche 1 bis 4, welches ferner aufweist:
eine Hülse (120), die ein magnetischer Körper ist und auf der in die zweite Richtung weisende Seite des ersten Ankers (116) angeordnet ist.

6. Normalerweise geschlossenes elektromagnetisches Ventil gemäß Anspruch 5, wobei der erste Anker (116) auf der in zweiter Richtung weisenden Seite der Stange (112) angeordnet ist und ein Ende der Vorspannmittel (122) durch die Hülse gehalten wird und das andere Ende der Vorspannmittel (122) an dem ersten Anker (116) anliegt, um den ersten Anker (116) in die erste Richtung zu spannen, und der zweite Anker (118) auf der in die erste Richtung weisenden Seite des ersten Ankers (116) angeordnet ist, eine Einführöffnung (118c) hat, in welche die Stange (112) eingeführt ist, und an der Stange (112) befestigt ist.

7. Normalerweise geschlossenes elektromagnetisches Ventil gemäß einem der Ansprüche 1 bis 6, welches ferner aufweist:
eine Führung, die i) ein magnetischer Körper ist, ii) auf der in die erste Richtung weisenden Seite des zweiten Ankers (118) angeordnet ist, iii) einen ersten Abschnitt hat, der von radialer Richtung aus gesehen mit dem zweiten Anker (118) überlappt, und einen zweiten Abschnitt hat, der aus der ersten Richtung gesehen mit dem zweiten Anker (118) überlappt, und iv) die Bewegung der Stange (112) in die erste Richtung und in die zweite Richtung führt.

8. Normalerweise geschlossenes elektromagnetisches Ventil gemäß einem der Ansprüche 1 bis 7, wobei die Stange (112) ein nicht magnetischer Körper ist.

9. Normalerweise geschlossenes elektromagnetisches Ventil gemäß einem der Ansprüche 1 bis 8, wobei die radiale Richtung eine Richtung ist, die senkrecht zur ersten Richtung und senkrecht zur zweiten Richtung ist.

10. Normalerweise geschlossenes elektromagnetisches Ventil gemäß einem der Ansprüche 1 bis 4, welches ferner aufweist:
ein Aufnahmeteil (120, 120b), in dem eine Fluidkammer ausgebildet ist, in der Hydraulikfluid gespeichert ist; und
Strömungswiderstandsänderungsmittel (224, 226),
wobei der erste Anker (116) in der Fluidkammer angeordnet ist, um die Fluidkammer in zwei Unterkammern (V1, V2) zu teilen, und ein Strömungspfad, der die zwei Unterkammern (V1, V2) miteinander verbindet, in dem ersten Anker (216) vorgesehen ist, und die Strömungswiderstandsänderungsmittel den Strömungswiderstand des Hydraulikfluids durch den Fluidpfad erhöhen, wenn sich der erste Anker (216) innerhalb der Fluidkammer bewegt.

11. Normalerweise geschlossenes elektromagnetisches Ventil gemäß Anspruch 10, wobei das Aufnahmeteil gebildet ist aus:
einer Hülse (120), die ein magnetischer Körper ist und auf der in die zweite Richtung weisenden Seite des ersten Ankers (216) angeordnet ist; und
eine Führung (120b), welche i) ein magnetischer Körper ist, ii) auf der in die erste Richtung weisenden Seite des zweiten Ankers (118) angeordnet ist, iii) einen ersten Abschnitt, der von radialer Richtung gesehen mit dem zweiten Anker (118) überlappt, und einen zweiten Abschnitt aufweist, der von der ersten Richtung aus gesehen mit dem zweiten Anker (118) überlappt, und iv) die Bewegung der Stange (212) in die erste Richtung und in die zweite Richtung führt.

12. Normalerweise geschlossenes elektromagnetisches Ventil gemäß Anspruch 10 oder 11, wobei die Strömungswiderstandsänderungsmittel ein Anlageteil (226) hat, das den Strömungswiderstand des Hydraulikfluids durch den Fluidpfad erhöht, indem es an dem ersten Anker (216) anliegt, um einen Teil des Fluidpfads (216e) blockiert, sich wenn der erste Anker (216) innerhalb der Fluidkammer bewegt.

13. Normalerweise geschlossenes elektromagnetisches Ventil gemäß Anspruch 12, wobei das Anlageteil (226) an dem ersten Anker (216) anliegt, um einen Teil des Fluidpfads (216e) zu blockieren, wenn sich der erste Anker (216) in die erste Richtung oder zweite Richtung bewegt.

14. Bremssteuersystem, das aufweist:
das normalerweise geschlossene elektromagnetische Ventil (100A) gemäß Anspruch 2, wobei
i) der Ventilsitz (114b) zwischen einem Radzylinder (20) und einem Hydraulikfluidauslasspfad (110b) angeordnet ist; und
ii) die Stange (112) eine Verbindung zwischen dem Radzylinder und dem Hydraulikfluidauslasspfad verschließt, um eine Abnahme des Radzylinderdrucks zu unterdrücken, wenn sie auf dem Ventilsitz (114b) sitzt, und eine Verbindung zwischen dem Radzylinder (20) und dem Hydraulikfluidauslasspfad (110b) öffnet, um den Radzylinderdruck zu verringern, wenn sie von dem Ventilsitz (114b) entfernt ist; und
Radzylinderdrucksteuermittel (200) zum Steuern eines der Spule (130) zugeführten Stroms, wobei die Radzylinderdrucksteuermittel die Stromzufuhr zu der Spule (130) stoppt, wenn vorhergesagt wird, dass die Abnahme des Radzylinderdrucks weiterhin unterdrückt wird.

15. Bremssteuersystem gemäß Anspruch 14, wobei die Radzylinderdrucksteuermittel (220) vorhersagen, dass die Abnahme des Radzylinderdrucks weiterhin unterdrückt werden wird, und die Stromzufuhr zu der Spule (130) stoppt, wenn der Radzylinderdruck für eine vorbestimmte Zeitdauer oder länger konstant geblieben ist.

## Revendications

1. Soupape électromagnétique (100A) normalement fermée comprenant:
un siège ayant un siège (114b) de soupape interposé dans un chemin de fluide hydraulique ;
une tige (112) qui est soutenue de manière à pouvoir se déplacer dans une première direction vers le siège (114b) de soupape ainsi que dans une deuxième direction éloignée du siège (114b) de soupape, et qui ferme le chemin de fluide hydraulique lorsqu'elle est placée sur le siège (114b) de soupape, et qui ouvre le chemin de fluide hydraulique lorsqu'elle est éloignée du siège (114b) de soupape ;
une première armature (116) qui est un corps magnétique qui est soutenue de manière à pouvoir se déplacer dans la première direction et dans la deuxième direction ;
un moyen de sollicitation destiné à solliciter la première armature (116) dans la première direction ;
une deuxième armature (118) qui est un corps magnétique qui est soutenue de manière à pouvoir se déplacer dans la première direction et dans la deuxième direction ; et
une bobine (130) qui est enroulée autour de la périphérie de la première armature (116),
où lorsque le courant n'est pas alimenté à la bobine (130), la première armature (116) pousse la tige (112) dans la première direction pour placer la tige (112) sur le siège (114b) de soupape en utilisant une force de sollicitation provenant du moyen de sollicitation, et
lorsque le courant est alimenté à la bobine (130), la première armature (116) se déplace dans la deuxième direction, **caractérisée en ce que**
la bobine (130) est enroulée autour de la périphérie de la deuxième armature (118) ; et
lorsque le courant est alimenté à la bobine (130), la deuxième armature (118) pousse la tige (112) dans la première direction avec une force correspondant à la quantité de courant alimentée à la bobine (130).

2. Soupape électromagnétique normalement fermée selon la revendication 1, dans laquelle lorsque le courant est alimenté à la bobine (130), la première armature (116) se déplace dans la deuxième direction par une force électromagnétique appliquée comme un résultat du courant qui est alimenté à la bobine (130), et la deuxième armature (118) pousse la tige (112) dans la première direction en utilisant la force électromagnétique correspondant à la quantité de courant alimentée à la bobine (130) de telle sorte que la tige (112) est soit placée sur le siège (114b) de soupape ou se retrouve dans une position éloignée du siège (114b) de soupape.

3. Soupape électromagnétique normalement fermée selon la revendication 1 ou 2, dans laquelle la première armature (116) a une partie de chevauchement (L1) et la deuxième armature (118) a une partie de chevauchement (L1), la partie de chevauchement de la première armature (116) et la partie de chevauchement (L1) de la deuxième armature (118) se chevauchent l'une l'autre de manière adjacente en regardant à partir de la direction radiale.

4. Soupape électromagnétique normalement fermée selon l'une quelconque des revendications 1 à 3, comprenant en outre :
un élément (120b) de transmission de flux magnétique qui est un corps magnétique qui chevauche de manière adjacente la première armature (116) et la deuxième armature (118), en regardant à partir de la direction radiale.

5. Soupape électromagnétique normalement fermée selon l'une quelconque des revendications 1 à 4, comprenant en outré :
un manchon (120) qui est un corps magnétique agencé sur le côté de la deuxième direction de la première armature (116).

6. Soupape électromagnétique normalement fermée selon la revendication 5, dans laquelle la première armature (116) est agencée sur le côté de la deuxième direction de la tige (112), et une extrémité du moyen de sollicitation (122) est retenue par le manchon et l'autre extrémité du moyen de sollicitation (122) vient en butée contre la première armature (116) afin de solliciter la première armature (116) dans la première direction, et la deuxième armature (118) est agencée sur le côté de la première direction de la première armature (116), a un trou d'insertion (118c) dans lequel la tige (112) est insérée, et est fixée à la tige (112).

7. Soupape électromagnétique normalement fermée selon l'une quelconque des revendications 1 à 6, comprenant en outre :
un guide qui i) est un corps magnétique, ii) est agencé sur le côté de la première direction de la deuxième armature (118), iii) a une première partie qui chevauche la deuxième armature (118) en regardant à partir de la direction radiale, et une deuxième partie qui chevauche la deuxième armature (118) en regardant à partir de la première direction, et iv) guide le mouvement de la tige (112) dans la première direction et dans la deuxième direction.

8. Soupape électromagnétique normalement fermée selon l'une quelconque des revendications 1 à 7, dans laquelle la tige (112) est un corps non magnétique.

9. Soupape électromagnétique normalement fermée selon l'une quelconque des revendications 1 à 8, dans laquelle la direction radiale est une direction orthogonale à la première direction et orthogonale à la deuxième direction.

10. Soupape électromagnétique normalement fermée selon l'une quelconque des revendications 1 à 4, comprenant en outre :
un élément de logement (120, 120b) dans lequel est formé une chambre de fluide dans laquelle le fluide hydraulique est stocké ; et
un moyen (224, 225) de changement de résistance à l'écoulement,
dans lequel la première armature (116) est agencée dans la chambre de fluide de manière à diviser la chambre de fluide en deux sous-chambres (V1, V2) et un chemin d'écoulement qui établit une communication entre les deux sous-chambres est prévu dans la première armature (216), et le moyen de changement de la résistance à l'écoulement augmente la résistance à l'écoulement du fluide hydraulique le long du chemin d'écoulement lorsque la première armature (216) se déplace à l'intérieur de la chambre de fluide.

11. Soupape électromagnétique normalement fermée selon la revendication 10, dans laquelle l'élément de logement est formé
d'un manchon (120) qui est un corps magnétique agencé sur le côté de la deuxième direction de la première armature (216) ; et
d'un guide (208) qui i) est un corps magnétique, ii) est agencé sur le côté de la première direction de la deuxième armature (118), iii) a une première partie qui chevauche la deuxième armature (118) en regardant à partir de la direction radiale, et une deuxième partie qui chevauche la deuxième armature (118) en regardant à partir de la première direction, et iv) guide le mouvement de la tige (212) dans la première direction et dans la deuxième direction.

12. Soupape électromagnétique normalement fermée selon la revendication 10 ou 11, dans laquelle le moyen de changement de la résistance à l'écoulement a un élément de butée (226) qui augmente la résistance à l'écoulement d'un fluide hydraulique à travers le chemin d'écoulement en venant en butée contre la première armature (216) pour bloquer une partie du chemin d'écoulement (216e) lorsque la première armature (216) se déplace à l'intérieur de la chambre de fluide.

13. Soupape électromagnétique normalement fermée selon la revendication 12, dans laquelle l'élément de butée (226) vient en butée contre la première armature (216) pour bloquer une partie du chemin d'écoulement (216e) lorsque la première armature (216) se déplace dans au moins une direction parmi la première et la deuxième direction.

14. Système de commande de freinage comprenant :
la soupape électromagnétique normalement fermée (100A) selon la revendication 2, où
i) le siège (114b) de soupape est interposé entre un cylindre (20) de roue et un chemin de décharge (1106) du fluide hydraulique ; et
ii) la tige (112) ferme la communication entre le cylindre de roue et le chemin de décharge du fluide hydraulique pour empêcher une diminution de la pression du cylindre de roue lorsqu'elle est placée sur le siège (114b) de soupape, et ouvre la communication entre le cylindre (20) de roue et le chemin de décharge (1106) du fluide hydraulique pour diminuer la pression du cylindre de roue lorsqu'elle est éloignée du siège (114b) de soupape ; et
un moyen de commande (200) de la pression de cylindre de roue destiné à commander un courant alimenté à la bobine (130), où le moyen de commande de la pression de cylindre de roue interrompt l'alimentation en courant à la bobine (130) lorsqu'on prévoit que la diminution de la pression de cylindre de roue continuera à être supprimée.

15. Système de commande de freinage selon la revendication 14, dans lequel le moyen de commande (200) de la pression de cylindre de roue prévoit que la baisse de la pression de cylindre de roue continuera d'être supprimée et interrompt l'alimentation en courant à la bobine (130) lorsque la pression de cylindre de roue continue à être constante pendant une période prédéterminée ou plus.
